# EUROPEAN PATENT APPLICATION

(11) **EP 4 794 362 A1**
(43) Date of publication of application: **19.08.2026**
(21) Application number: 26159366.9
(22) Date of filing: 18.02.2026
(51) Int. Cl.: H04W 4/80, H04W 4/70

(54) **SYSTEMS AND METHODS FOR COORDINATING PERIODIC ADVERTISING WITH RESPONSES (PAWR) TRAINS IN HIGH-DENSITY IOT ENVIRONMENTS**

(30) Priority: 18.02.2025 US 202519056339
(71) Applicant: Walmart Apollo, LLC, Bentonville, Arkansas 72716 (US)
(72) Inventor: STUTZENBURGER, Eric, Bentonville, 72716 (US); RIGLING, Justin, Bentonville, 72716 (US)
(74) Representative: Appleyard Lees IP LLP

(57) **Abstract**

The present disclosure, in various embodiments, provides a system, method, and device for coordinating wireless networks of loT devices. The method includes transmitting a coordination signal to a first gateway and a second gateway, and the coordination signal can be configured to coordinate a PAwR communication schedule. The PAwR communication schedule can include coordinated PAwR advertising intervals for the gateways.

## Description

### CROSS-REFERENCE TO RELATED APPLICATION

This application claims the benefit of U.S. Non-Provisional Application No. 19/056,339 filed February 18, 2025, which is incorporated herein by reference in its entirety.

### TECHNICAL FIELD

The embodiments described herein generally relate to systems, devices, and methods for coordinating wireless networks of Internet of Things (IoT) devices. In particular, the embodiments relate to coordinating periodic advertising with responses (PAwR) trains in high-density loT environments.

### BACKGROUND

The following statement does not constitute an acknowledgment that any subject matter herein is considered prior art or commonly known to those skilled in the relevant art.

The Internet of Things (loT) refers to a network of interconnected devices that communicate with other devices(s) and with external systems, often with minimal human intervention. IoT devices typically include sensors that monitor various parameters in the surrounding environment. The sensors collect data and transmit it to other devices or a central management system using wired or wireless communication protocols. Common sensors include thermometers, accelerometers, microphones, cameras, motion detectors, moisture sensors, and energy meters, among others. In addition to sensors, loT devices may include actuators, which allow the loT system to respond to data signals and perform physical tasks. For instance, a smart thermostat may include both sensors (to monitor temperature) and actuators (to control HVAC systems).

The retail industry uses loT technology to improve operations, optimize customer experiences, and streamline inventory management. IoT devices can be deployed throughout the entire supply chain, from warehouses to retail floors, enabling real-time monitoring and control. For example, asset tags, security sensors, and environmental monitoring devices track the location, condition, and safety of products stored in warehouses.

Within stores, electronic shelf labels (ESL) utilize e-paper or e-ink displays to dynamically present pricing, promotions, and availability information, directly synced from the retailer's central system. ESL systems minimize the need for manual price updates, ensuring consistency and accuracy across products. Retailers can also integrate occupancy sensors, geolocation trackers, and customer interaction technologies to optimize store layouts and personalize marketing strategies. For example, geolocation technology can track customer movements within the store to identify high-traffic areas and adjust product placements accordingly.

Many existing loT networks employ gateways to operate as intermediaries between loT devices and cloud platforms. Gateways aggregate data from multiple devices and manage network connectivity. Gateways operate as local hubs that reduce the communication burden on individual sensors.

The implementation of loT networks also requires consideration of several technical challenges. The challenges include network scalability, device coordination, interference mitigation, data security, and power management. High-density environments, such as retail stores or industrial facilities, present additional complexities, including packet collisions, overlapping connections, and the need for seamless handoffs between gateways. Furthermore, IoT devices often operate under constrained conditions, such as limited battery life and restricted processing power, requiring protocols and systems that are efficient and reliable. As loT systems scale to support thousands of devices, it becomes important to address issues related to network latency, reliable data delivery, and secure communication.

Furthermore, the loT deployments in retail environments may involve higher densities of devices and gateways. Retail settings, such as grocery stores or warehouses, may require the coordination of tens of thousands of electronic shelf labels (ESLs) and hundreds of gateways. This high-density network creates unique technical challenges, such as the increased probability of collisions between advertising packets transmitted by different devices, which can lead to longer discovery latencies and hinder network performance.

Since advertising packets from an IoT device may be received by multiple gateways unaware of each other's activities, duplicate connections to the same device can be established, leading to inefficiencies and wasted resources. These challenges are further exacerbated by the absence of sitewide coordination mechanisms between gateways.

Periodic Advertising with Responses (PAwR) is a communication protocol directed to improve the scalability of Bluetooth Low Energy (BLE) networks. PAwR enables devices to exchange data within prescribed advertising intervals, where an access point broadcasts periodic advertisements and designated response slots allow loT devices to send targeted data. In network deployments, PAwR trains provide for data exchanges between access points (e.g., gateways) and loT devices, such as Electronic Shelf Labels (ESLs), sensors, and actuators.

Conventional PAwR implementations often face challenges in high-density loT environments, such as retail spaces or industrial facilities with numerous sensors. The lack of synchronization mechanisms for PAwR trains across multiple gateways can result in overlapping advertising intervals and response slots. Such overlaps lead to interference, packet collisions, and increased latency, which degrade overall communication reliability and efficiency. Furthermore, in dense environments, the absence of coordinated timing for PAwR trains exacerbates resource contention, causing gateways to compete for channel bandwidth and reducing the system's ability to manage multiple devices effectively. In high-density deployments, these inefficiencies can result in missed updates, increased power consumption, and inconsistent coverage.

Therefore, alternative systems and methods are desired to remedy the inefficiencies of conventional systems.

### SUMMARY

The purpose of this summary is to acquaint the reader with the subsequent detailed description, without limiting or defining any claimed or unclaimed inventions. This summary is not a comprehensive analysis and does not aim to highlight key features. Instead, the summary introduces certain inventive concepts in a generalized form as an introduction to the detailed description that follows. One or more inventions may reside in any combination or sub-combination of the elements or process steps disclosed in any part of this document, including its claims and figures.

In one aspect, a sitewide controller can be configured to connect to a first and a second gateway in a PAwR architecture. The sitewide controller can be further configured to transmit a coordination signal to the first gateway and the second gateway, and the coordination signal can be configured to coordinate a PAwR communication schedule of the first gateway and the second gateway. The PAwR communication schedule can comprise coordinated PAwR advertising intervals for the first gateway and the second gateway. In some embodiments, the sitewide controller can be further configured to update the PAwR communication schedule based on configuration data received from at least one of a configuration server or user instruction data received from a user terminal. In some embodiments, the coordination signal can be configured to cause a suspension of a service discovery process at one or more of the first and second gateways based at least in part on a coordination criteria. In some embodiments, the coordination criteria can include a volume of advertising messages, the advertising messages includes one or more of loT device Media Access Control (MAC) address, IoT device virtual MAC (vMAC) address, signal strength, or data associated with one or more of a type or manufacturer of a device broadcasting the advertising messages. In some embodiments, wherein the PAwR communication schedule includes one or more of assignments of advertising intervals, timing schedules, or channels. In some embodiments, the coordination signal is configured to suspend a plurality of low-priority service discovery processes at one of the first gateway and the second gateway, wherein the plurality of low-priority service discovery processes includes one or more of authentication checks, detailed capability inquiries, or secure key exchanges. In some embodiments, the coordination criteria include one or more of a minimum signal strength threshold, a device priority, a battery level, or a device classification. In some embodiments, the first gateway and the second gateway can be determined to be in a same proximity zone based on virtual MAC (vMAC) addresses assigned to each gateway and correlated to a mapping framework identifying a list of proximate gateways. In some embodiments, the sitewide controller can be connected to a plurality of gateways are divided into a plurality of zones.

In one aspect, a method can comprise transmitting a coordination signal to a first gateway and a second gateway, and coordination signal can be configured to coordinate a PAwR communication schedule of the first gateway and the second gateway. The PAwR communication schedule can comprise coordinated PAwR advertising intervals for the first gateway and the second gateway. In some embodiments, the method can further comprise updating the PAwR communication schedule based on configuration data received from at least one of a configuration server or user instruction data received from a user terminal. In some embodiments, the coordination signal can be configured to cause a suspension of a service discovery process at one or more of the first and second gateways based at least in part on a coordination criteria. In some embodiments, the coordination criteria can include one or more of a volume of advertising messages, the advertising messages includes one or more of IoT device Media Access Control (MAC) address, loT device virtual MAC (vMAC) address, signal strength, or data associated with one or more of a type or manufacturer of a device broadcasting the advertising messages. In some embodiments, the PAwR communication schedule can include one or more of assignments of advertising intervals, timing schedules, or channels. In some embodiments, the coordination signal can be configured to suspend a plurality of low-priority service discovery processes at one of the first gateway and the second gateway, wherein the plurality of low-priority service discovery processes includes one or more of authentication checks, detailed capability inquiries, or secure key exchanges. In some embodiments, the coordination criteria can include one or more of a minimum signal strength threshold, a device priority, a battery level, or a device classification. In some embodiments, the first gateway and the second gateway can be determined to be in a same proximity zone based on virtual MAC (vMAC) addresses assigned to each gateway and correlated to a mapping framework identifying a list of proximate gateways. In some embodiments, the sitewide controller can be connected to a plurality of gateways are divided into a plurality of zones.

In one aspect, a computer-readable storage medium, storing instructions thereon, that, when executed by a processor, configure the processor to transmit a coordination signal to the first gateway and the second gateway, and coordination signal can be configured to coordinate a PAwR communication schedule of the first gateway and the second gateway. The PAwR communication schedule can comprise coordinated PAwR advertising intervals for the first gateway and the second gateway. In some embodiments, the coordination signal can be configured to cause a suspension of a service discovery process at one or more of the first and second gateways based at least in part on a coordination criteria.

### BRIEF DESCRIPTION OF THE DRAWINGS

The present invention will be described through exemplary, non-limiting embodiments, with reference to the accompanying drawings, in which:
FIG. 1 is an illustrative block diagram of the loT wireless network management system 100, according to an embodiment.
FIG. 2 is an illustrative block diagram of the loT wireless network management system 200, according to an embodiment.
FIG. 3 is an illustrative block diagram of the edge connect module 300, according to an embodiment.
FIG. 4 is an illustrative block diagram of the loT wireless network management system 400, according to an embodiment.
FIG. 5 is an illustrative block diagram of the loT edge connectivity framework 500, according to an embodiment.
FIG. 6 is an illustrative flow chart of the event detection and trigger mechanism 600, according to an embodiment.
FIG. 7 is an illustrative flow chart of the event detection and trigger mechanism 700, according to an embodiment.
FIG. 8 is an illustrative flow chart of a sitewide configuration method 800, according to an embodiment.

### DESCRIPTION OF VARIOUS EMBODIMENTS

The embodiments disclosed herein are illustrations of various implementations of the inventive concepts and techniques described in this disclosure. The statements made in this description do not necessarily limit any of the claimed embodiments. Rather, they are provided to illustrate different possible implementations, and variations in form or configuration may still fall within the scope of the invention(s). Certain features described herein may apply to some embodiments but not to others. Additionally, unless expressly indicated otherwise, the use of singular elements shall include plural forms, and vice versa, with no loss of generality or change in the scope of the invention.

The accompanying drawings are provided to aid in the understanding of the embodiments and do not limit the scope of the invention(s). For clarity and consistency, like reference numerals are used throughout the figures to refer to the same or similar components. It will also be apparent to those skilled in the art that the invention(s) described herein may be practiced without specific details mentioned in certain examples. In some instances, well-known methods, procedures, or elements may not be described in detail to avoid unnecessarily obscuring the core aspects of the invention(s).

It should be noted that the terms of approximation are used herein to allow for reasonable deviations from the literal values, provided such deviations do not substantially alter the intended function or purpose. Further, the use of terms such as "including" and "comprising" shall mean "including, but not limited to," unless explicitly specified otherwise. Likewise, lists of items are provided for illustration only and should not be construed as mutually exclusive or exhaustive unless expressly indicated.

The systems and methods described herein may be implemented in hardware, software, or a combination of both. For example, these embodiments may be realized as computer programs executing on one or more programmable computing devices, which may include servers, network appliances, embedded devices, laptops, smartphones, or other computing devices capable of performing the described functionality. These computer programs or computer-executable instructions may be written in various programming languages, including but not limited to high-level procedural, object-oriented, or scripting languages, or in compiled or interpreted languages. They may be stored on non-transitory computer-readable media such as magnetic disks, optical disks, or solid-state storage devices, which when executed by a computing system, perform the methods described herein.

Certain sections in the present disclosure may be provided under a title or heading. The title or heading is included solely for ease of reference and clarity. The disclosure within the titled sections is not limited to the specific embodiments indicated and may apply to other embodiments throughout the present disclosure.

Periodic Advertising with Responses (PAwR) is a structured BLE communication protocol designed to support high-density loT networks. Deploying PAwR in large-scale environments, such as retail stores or warehouses, introduces challenges related to train synchronization, channel interference, response slot collisions, and device reassignment. For instance, uncoordinated PAwR trains between Electronic Shelf Labels (ESLs) may result in overlapping advertising intervals or response slots, leading to collisions and missed communications. On the gateway side, the lack of synchronized scanning schedules among multiple gateways introduces inefficiencies, causing redundant scans, wasted resources, and missed device responses.

To address these challenges, systems, devices, and methods for coordinating high-density PAwR deployments are disclosed herein. The system provides for sitewide synchronization of PAwR trains, leveraging a sitewide controller or an edge connect module instance integrated into gateways. In one embodiment, the sitewide controller connected to a plurality of gateways is configured to manage PAwR advertising intervals, response slot assignments, and channel sequences across all connected gateways. The controller transmits coordination signals to gateways to synchronize the gateway PAwR operations, to implement non-overlapping advertising intervals and optimizing resource allocation. The sitewide controller aggregates PAwR data, including train parameters and device details , enabling device reassignment and load balancing across gateways. By integrating centralized management, the disclosed system minimizes response slot collisions, reduces channel interference, and improves communication reliability in high-density environments.

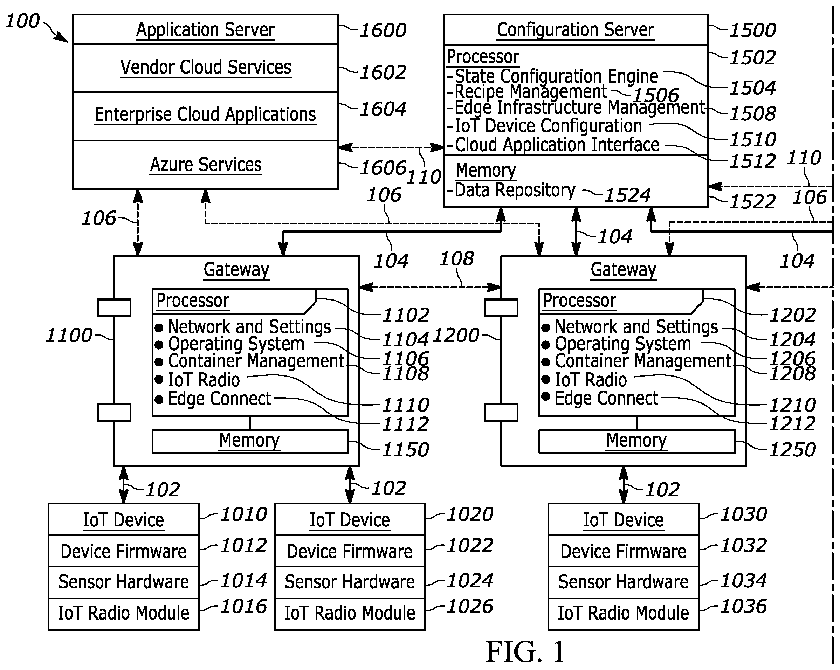

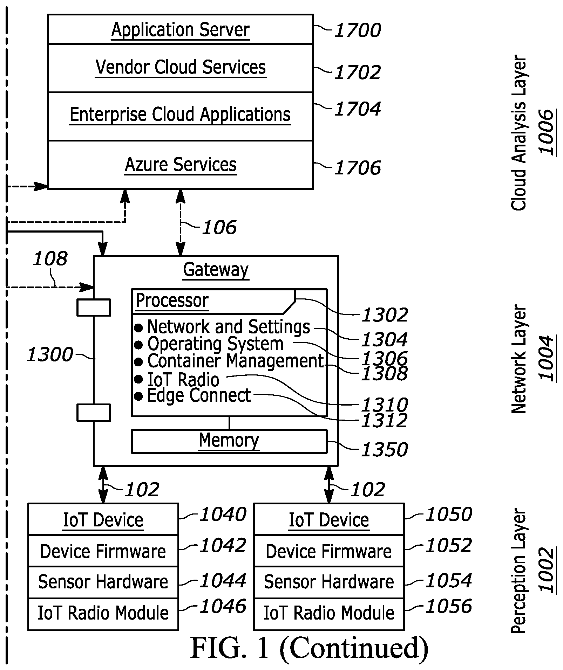

Referring now to FIG. 1, shown therein is an illustrative diagram of the loT network system 100, according to an embodiment.

The embodiments disclosed herein include a system 100 for the management and coordination of PAwR-enabled loT devices within a multi-layer network. The system 100 includes loT devices 1010, 1020, 1030, 1040, 1050 and gateways 1100, 1200, 1300. The gateways 1100, 1200, 1300 operate as intermediary nodes between the perception layer 1004 and the cloud analysis layer 1006. The loT devices 1010, 1020, 1030, 1040, 1050, configured for PAwR communication, transmit periodic advertisements containing environmental data over wireless protocols, such as Bluetooth Low Energy (BLE). These advertisements follow a PAwR Train configuration, which includes predefined PAwR Advertising Channels, Response Slot Timing, and Channel Sequence Mapping. A PAwR train includes a periodic sequence of advertising intervals and response slots used by loT devices and gateways in a BLE (Bluetooth Low Energy) network implementing Periodic Advertising with Responses. The PAwR train can be associated to the service discovery process. The PAwR train includes advertising intervals, which are dedicated time slots during which devices broadcast information, such as device status or updates, to nearby gateways or other access points. Additionally, the PAwR train includes response slots, which are specific time intervals assigned to individual devices within the train, enabling them to transmit data back to the access point while minimizing message collisions. The gateways 1100, 1200, 1300 may process the PAwR transmissions locally to extract data, perform synchronization with PAwR subgroup assignments, and aggregate sensor data. The gateways also coordinate PAwR Advertising Intervals to reduce interference and ensure seamless connectivity across overlapping zones. The processed data is further transmitted to cloud servers 1500, 1600, 1700 deployed in a cloud computing platform for analytics and network-level decision-making.

In an embodiment, the processing, synchronization, and coordination of PAwR trains can occur at the gateways 1100, 1200, 1300, including adjusting response slot spacing and optimizing group-based response delays. Alternatively, the operations can be managed centrally by the configuration server 1500, which transmits PAwR synchronization parameters and dynamic assignment maps to the gateways 1100, 1200, 1300. The centralized control by the server or the coordinated-control by the gateways provides for non-overlapping advertising intervals and real-time network management, particularly in high-density loT deployments.

The system 100 includes a perception layer 1002. The perception layer 1002 includes a plurality of end-point devices 1010, 1020, 1030, 1040, and 1050 (also referred to as sensors or loT devices). In an embodiment, the end-point devices 1010, 1020, 1030, 1040, and 1050 are provided to collect environmental data or monitor specific conditions. The loT devices are illustrative, and a reference to one loT device, such as loT device 1010, may also refer to other devices, such as loT devices 1020, 1030, 1040, or 1050. The loT devices are not limited to the specific numbers shown in the figures. In various embodiments, there can be more or fewer loT devices installed based on the requirements of the system 100. The loT devices may include a variety of components such as temperature sensors, Electronic Shelf Labels (ESLs), thermometers, accelerometers, optical scanners, and moisture detectors, as well as other specialized hardware such as actuators.

Additionally, the reference to the subcomponents of one loT device can refer to the corresponding subcomponents of one or more other loT devices. For example, a reference to an operation performed by device firmware 1012 of loT Device 1010 can refer to a similar process executed by device firmware 1022 of IoT Device 1020, device firmware 1032 of loT Device 1030, device firmware 1042 of loT Device 1040, or device firmware 1052 of loT Device 1050. Similarly, a reference to the sensor hardware 1014 of IoT Device 1010 can mean to include sensor hardware 1024 of loT Device 1020, sensor hardware 1034 of loT Device 1030, sensor hardware 1044 of loT Device 1040, or sensor hardware 1054 of loT Device 1050. Further, a reference to the loT radio module 1016 in loT Device 1010 can refer to similar operations carried out by loT radio module 1026 of loT Device 1020, loT radio module 1036 of loT Device 1030, loT radio module 1046 of loT Device 1040, or loT radio module 1056 of loT Device 1050. A subcomponent, while part of distinct loT devices, may perform equivalent operations for coordinated functionality across the entire network system 100.

The perception layer 1002 operates over a perception layer network 102, enabling loT devices 1010 configured for PAwR communication to transmit loT device data to the network layer 1004. The PAwR implementation within the perception layer 1002 uses synchronized periodic advertisements to efficiently exchange data between loT devices 1010 and gateways 1100, 1200, 1300, optimizing communication reliability and reducing interference.

In an embodiment, the perception layer network 102 supports lightweight, low-power wireless protocols tailored for PAwR, including Bluetooth Low Energy (BLE). BLE enables periodic advertising with response (PAwR) trains, where devices broadcast data using PAwR advertising channels within defined subevent intervals. For deployments with high device density, the network 102 may employ PAwR subgroup assignments and response slot timing to stagger device communication, reducing collisions. Dynamic frequency selection and channel sequence mapping may also be implemented to adapt to interference conditions and enhance communication stability.

In an embodiment, loT devices within the perception layer 1002 connect with one or more gateways 1100, 1200, 1300 through PAwR-based communication in the perception layer network 102. The network 102 supports adaptive mechanisms such as advertising train timing offsets and group-based response delays to provide synchronization across devices and gateways, particularly in high-density environments. In an embodiment, the perception layer 102 enables local data buffering within loT devices 1010 to store unacknowledged response slot transmissions, mitigating data loss during brief network disruptions.

In an embodiment, the perception layer network 102 provides bidirectional wireless communication between PAwR-enabled loT devices 1010, 1020, 1030, 1040, 1050 and gateways 1100, 1200, 1300. loT devices 1010 transmit loT device data during allocated response slots. The gateways 1100, 1200, 1300 send gateway data comprising PAwR synchronization parameters, advertising train configurations, or control instructions. For example, IoT devices 1010 such as electronic shelf labels (ESLs) may receive gateway data to update display content during specific response slots. For loT devices 1010, gateway data may include control data to trigger specific actions, such as adjusting equipment or environmental settings. The protocols and PAwR configurations in network 102 may vary based on device requirements, range, power consumption, and deployment topology, with mechanisms such as response slot spacing and subgroup prioritization dynamically adjusting to optimize performance across diverse loT device types.

The loT device data transmitted over network 102 may include sensor data. For example, a temperature sensor may transmit a sensor data including a temperature reading such as 23°C. A leak sensor might transmit a sensor data including a "Leak detected" status signal. For an energy meter IoT device 1010, the loT device data may include energy consumption data at periodic intervals. The loT device data may include metadata. The metadata may include a unique sensor ID, timestamp, and battery status, to provide contextual information for further processing at the gateway 1100. The packet format of the loT device data depends on the protocol being used. For example, BLE data packets may follow the structure defined in the BLE advertising or connection protocol.

In an embodiment, security mechanisms are implemented for transmissions over the perception layer network 102. The security mechanisms may include authentication tokens or session identifiers in the loT device data packets to verify the authenticity of the transmitting loT devices 1010. Lightweight security protocols, configured for loT devices 1010 with limited processing capacity, can be installed for security and efficiency. The lightweight security protocols can include Elliptic Curve Cryptography (ECC) providing strong encryption with smaller keys. The lightweight security protocols can include DTLS (Datagram Transport Layer Security) for securing datagrams with minimal latency. In an embodiment, symmetric encryption including AES-128 and pre-shared keys may be used with the loT device data packets to provide efficient, secure communication without incurring the processing demands typical of more complex security frameworks.

In an embodiment, IoT devices 1010, can include additional components beyond sensors to perform specialized operations. The components may include actuators, drivers, display modules, data simulators, relays, and controllers. For example, ESLs within the loT devices 1010 may utilize LED displays, LCD panels, or e-paper displays to present display content data (included in the gateway data) received from the gateways 1100 over the perception layer network 102.

In an embodiment, the loT device 1010 includes device firmware 1012 configured to govern the internal operations of the loT device 1010 including managing tasks such as data collection, communication, and control logic. The loT device 1010 includes sensor hardware 1014 that can vary depending on the use case and may include temperature sensors, optical cameras, moisture detectors, motion sensors, or other specialized hardware to detect environmental or operational conditions. The loT device 1010 includes an loT radio module 1016 configured to enable wireless communication over the perception layer network 102 using protocols such as Bluetooth Low Energy (BLE) with PAwR. In an embodiment, the loT device 1010 is configured to participate in PAwR trains, transmitting advertising messages during predefined PAwR advertising intervals and responding within assigned response slots.

The loT device 1010 may include simulator components configured to generate simulated data, replicating specific environmental conditions or sensor outputs to enable testing or calibration. The simulated data can be included in the loT device data. This simulated data can emulate temperature values or leak detection statuses to validate device performance without requiring actual environmental input.

The loT network system 100 includes a network layer 1004 (also referred to as the intermediate network layer 1004). The intermediate network layer 1004 operates as a communication bridge between the perception layer 1002, which includes PAwR-enabled loT devices 1010, and the cloud analysis layer 1006. The intermediate network layer 1004 provides bidirectional data exchange by routing loT device data and gateway data. The network layer 1004 employs PAwR-specific synchronizations, including channel sequence mapping and subgroup assignments, to receive IoT device data from loT devices 1010 during response slots and transmit gateway data over PAwR advertising channels.

The gateways 1100, 1200, and 1300 can provide for data aggregation by routing and collecting loT device data from the loT devices 1100. The aggregated inter-gateway data can be transmitted by the gateway 1100 to another gateway 1200 or 1300. The cloud-directed data can be transmitted by the gateway 1100 to cloud analysis layer 1006. By aggregating multiple data streams from the perception layer 1002, the intermediate network layer 1004 reduces the number of independent transmissions to the cloud analysis layer 1006.

The intermediate network layer 1004 provides bidirectional communication between the loT devices 1010 and the gateways 1100. Further, the intermediate network layer 1004 provides bidirectional communication between the gateways 1100 and the servers 1500, 1600, 1700. The gateways 1100, 1200, 1300 can transmit control data (included in the gateway data) to the loT devices, such as Electronic Shelf Labels (ESLs) or actuators.

The gateways 1100, 1200, and 1300 are configured to communicate with heterogeneous loT devices in a PAwR-enabled network. The gateways implement PAwR synchronization parameters to coordinate communication with devices operating in distinct PAwR trains. The gateways 1100, 1200, and 1300 perform protocol translation to harmonize diverse loT device communication protocols, such as BLE, Zigbee, or LoRa. Additionally, the gateways manage PAwR advertising train timing offsets to minimize overlap in response slots and prevent packet collisions. The gateways may optimize network performance by dynamically adjusting response slot spacing and subgroup assignments to reduce congestion. The processes provide for coordination of PAwR trains across multiple gateways, preventing overload on any single gateway.

In an embodiment, the intermediate network layer 1004 implements security mechanisms to protect data and provide trusted communication between system components. Gateways 1100, 1200, and 1300 may apply encryption protocols, such as TLS or AES, to secure the transmission of cloud directed data over network 104.

The intermediate network layer 1004 includes gateways 1100, 1200, and 1300. The gateways are not limited to the specific numbers shown in the FIG. 1. There may be fewer or more gateways in the system 100, depending on the deployment requirements. The gateways are illustrative, and a reference to one gateway, such as gateway 1100, the description may also refer to other gateways, such as gateways 1200 or 1300.

Additionally, a reference to a subcomponent of one gateway, such as gateway 1100, can refer to corresponding subcomponents in other gateways within the network layer 1004. The processor 1102 and memory 1150 in gateway 1100 can perform processing and storage operations and may refer to similar functions executed by processor 1202 and memory 1250 in gateway 1200 or processor 1302 and memory 1350 in gateway 1300. For example, a reference to network and settings 1104 in gateway 1100 can refer to similar operations performed by network and settings 1204 in gateway 1200 or network and settings 1304 in gateway 1300. Similarly, a reference to the operating system 1106 in gateway 1100 may also refer to operating system 1206 in gateway 1200 or operating system 1306 in gateway 1300. A reference to the loT radio 1110 in gateway 1100 can refer to corresponding operations carried out by loT radio 1210 in gateway 1200 or loT radio 1310 in gateway 1300. Further, the container management 1108 in gateway 1100 may represent similar processes performed by container management 1208 in gateway 1200 or container management 1308 in gateway 1300. Furthermore, edge connect module 1112 in gateway 1100 can correspond to edge connect module 1212 in gateway 1200 or edge connect module 1312 in gateway 1300. A subcomponent, while integrated into distinct gateways, may perform equivalent functions for coordinated operations across the entire network system 100.

Additionally, any processes, operations, or functions attributed to a specific component of the gateway 1100 may be performed through the execution of the data generated by that component. Furthermore, the processes, operations, and configurations associated with the components of the gateway 1100 may be executed as steps in a method for achieving the described functionality.

The gateways 1100 act as intermediary processing nodes between loT devices in the perception layer 1002 and higher-level systems in the cloud analysis layer 1006. The gateways receive loT device data from loT devices 1010 through PAwR trains and translate local protocols into upstream protocols compatible with cloud systems, such as MQTT or HTTPS. The gateways dynamically configure PAwR subevent intervals and group-based response delays to improve device coordination in high-density environments. Aggregated loT device data is formatted into cloud-directed data and transmitted to the cloud analysis layer 1006. The gateways 1100 may generate gateway data comprising PAwR synchronization parameters, which is transmitted to loT devices.

In an embodiment, the gateway processor 1102 includes a network and settings component 1104. The network and settings component 1104 can generate network configuration data to execute the operations attributed to the component 1104. The network configuration data is included within the gateway data generated at the gateway level. Alternatively, the network configuration data can be referred to as gateway data directed to operations performed by the network and settings component 1104. The gateway 1100 may include a dedicated network and settings module to execute the described functions of the network and settings component 1104. Alternatively, the processor 1102 can be configured to perform network and settings functions.

In an embodiment, the network and settings component 1104 manages PAwR network parameters. The network parameters may include response slot timing, channel sequence mapping, and PAwR advertising channels. The network and settings component 1104 can configure routing tables for data flow between devices, gateways, and cloud systems.

In an embodiment, the network and settings component 1104 can implement encryption protocols to secure loT device data, gateway data, and cloud-directed data. The network and settings component 1104 manages secure keys, certificates, or authentication tokens used for device communication and protocol handshakes. For wireless networks, the network and settings component 1104 adjusts channel selection and frequency hopping patterns to minimize interference. The network and settings component 1104 can enforce network policies by generating firewall data and access control data (such as ACLs) to restrict unauthorized access.

In an embodiment, the network and settings component 1104 interacts with network discovery protocols (e.g., mDNS or UPnP) to identify new loT devices and process loT device onboarding. The network and settings component 1104 can also implement Quality of Service (QoS) policy data received from the configuration server 1500 to prioritize specific types of traffic, such as real-time sensor alerts, over non-critical data streams. The configuration settings maintained by the network and settings component 1104 may be coordinated locally with other gateways 1200, 1300 on the network 108.

In an embodiment, the gateway processor 1102 includes an operating system component 1106. The operating system component 1106 can generate resource management data to execute the operations attributed to the component 1106. The resource management data is included within the gateway data generated at the gateway level. Alternatively, the resource management data can be referred to as gateway data directed to operations performed by the operating system component 1106. The gateway 1100 may include a dedicated operating system module to execute the described functions of a operating system component 1106. Alternatively, the processor 1102 can be configured to perform operating system functions.

The operating system component 1106 provides for synchronized operation of network drivers, security protocols, and software modules specific to PAwR configurations. Gateway data generated by the operating system component 1106 includes timing offsets for PAwR trains and prioritized task schedules to optimize communication performance.

The operating system component 1106 may provide for management of the memory 1150. The operating system component 1106 can allocate and deallocate memory blocks dynamically to provide that processes running on the gateway 1100 have the necessary resources while avoiding memory conflicts. In an embodiment, the operating system component 1106 manages a virtual memory system, swapping data between physical memory and storage to optimize performance under varying workloads. The memory 1150 can further include generation and maintenance of logs, enabling monitoring and diagnostics of gateway activities.

In an embodiment, the gateway processor 1102 includes a container management component 1108. The gateway 1100 may include a dedicated container management module to execute the described functions of a container management component 1108. Alternatively, the processor 1102 can be configured to perform container management functions.

The container management component 1108 is configured to provide for the deployment, execution, and management of containerized applications within the gateway 1100. The container management component 1108 also provides for resource isolation such that the container(s) operate independently to avoid conflicts. The container deployment data allocates CPU cycles, memory, and storage resources to individual containers. The container management component 1108 may also define namespaces and control groups (cgroups) to monitor resource consumption in real time. If a container underperforms or encounters errors, the container management component 1108 causes the gateway 1100 to restart or replace the container without impacting the overall system 100.

In another embodiment, the container management component 1108 supports the deployment of Snaps or the self-contained software packages. Snaps can bundle all required dependencies with the application providing consistency across different environments and minimizing compatibility issues. The component 1108 can provide Snapcraft tooling to manage the installation, update, and rollback of Snaps. Snaps can be deployed in read-only mode to maintain system integrity, with only designated data or configuration areas being writable.

The container management component 1108 can execute orchestration features to manage the lifecycle of multiple containers by scheduling their start, stop, and restart processes based on predefined triggers or performance conditions. The component 1108 can provide that containers operate autonomously but remain synchronized with system 100 operations.

In an embodiment, the gateway processor 1102 includes an loT radio 1110 configured for PAwR operations. The gateway 1100 may include an loT radio module to execute the described functions of the loT radio. Alternatively, the processor 1102 can perform PAwR radio functions. The loT radio 1110 provides for wireless connectivity with PAwR-enabled loT devices 1010 over BLE protocols. The loT radio 1110 operates within PAwR advertising channels and periodically scans for incoming advertising packets from IoT devices 1010. The loT radio 1110 transmits data between IoT devices 1010 and the gateway 1100, adhering to the PAwR train configuration. The loT radio 1110 may manage response slot timing and subevent intervals to maintain synchronized communication with loT devices.

The loT radio 1110 can provide adaptive channel selection within PAwR advertising channels to mitigate interference from co-located networks. In high-density deployments, the loT radio 1110 can dynamically coordinate channel sequence mapping and response slot spacing to avoid congestion. Spread-spectrum techniques, such as frequency hopping, can be implemented to improve communication reliability by distributing transmissions across multiple channels.

The loT radio 1110 further supports multi-protocol communication while optimizing PAwR train configurations. The loT radio 1110 can concurrently manage protocol stacks for BLE and other loT standards, enabling connectivity with heterogeneous loT devices 1010. The loT radio 1110 can precise timing synchronization mechanisms to align advertising train timing offsets with PAwR-enabled devices, reducing latency and minimizing retransmissions. In an embodiment, the loT radio 1110 optimizes packet delivery using signal-to-noise ratio (SNR) thresholds and implements encrypted communication at the radio level to ensure secure wireless transmissions.

In an embodiment, when a PAwR-enabled IoT device initiates communication, the device transmits advertising packets as part of the loT device data over designated PAwR advertising channels. Upon detecting an advertising packet, the loT radio 1110 extracts relevant information such as the device's virtual MAC (vMAC) address, PAwR subgroup assignment, and service data. The loT radio 1110 initiates a connection request, signaling the intent to establish a PAwR train. The loT device responds with its assigned response slot timing and advertising train parameters. The gateway 1100 completes the handshake by synchronizing subevent intervals and configuring response slots to enable ongoing communication. Once the connection is established, the loT radio 1110 dynamically maintains synchronization with the PAwR train, ensuring stable data exchange.

The BLE Specification can provide support for three distinct communication topologies to accommodate varying network needs and power efficiency requirements among loT devices 1010 or between an loT device 1010 and the gateway 1100. First, BLE allows for one-to-one communication between devices in a connection-oriented mode. In this mode, a stable connection is established between devices to facilitate ongoing data exchange. Second, BLE enables one-to-one communication in a connectionless mode, where data packets are transmitted without the establishment of a persistent connection, allowing for quicker interactions and conserving power. Finally, BLE supports a one-to-many communication topology in a connectionless broadcast mode, where a single device can transmit data simultaneously to an unlimited number of receiving devices. This broadcast mode further enables mesh networking capabilities, which provide for the interconnection of tens of thousands of devices in a scalable and distributed communication framework.

Version 5.4 of the BLE Specification supports Periodic Advertising with Responses (PAwR), which provides for bidirectional communication between gateways 1100 and large numbers of loT devices 1010 in a centralized, star topology. The PAwR feature enables a single gateway, such as gateway 1100, to receive cloud-directed data from, and transmit gateway data to, hundreds or even tens of thousands of loT devices 1010. By incorporating PAwR into the communication protocol, the gateway 1100 can manage synchronized communication with large-scale loT deployments without the need for individual connections to other device(s), providing efficient data exchange across the perception layer 1002.

The PAwR feature utilizes two core elements of the BLE Specification: extended advertising and periodic advertising. In extended advertising, an advertising loT device 1010 transmits loT device data as advertising packets over one or more of the three advertising channels defined by the BLE Specification. The extended advertising packets may not include advertising data. Instead, the advertising packets include an auxiliary packet pointer that directs the gateway 1100 to secondary advertising channels where secondary advertising packets are transmitted. The auxiliary packet pointer also provides timing information, allowing the gateway 1100 to locate these secondary advertising packets. These secondary packets can include larger amounts of data than conventional advertising packets, supporting the transmission of multiple data segments through "chained" packets.

In an embodiment, PAwR enables a gateway 1100 to synchronize with a periodic advertising train transmitted by loT devices 1010. The gateway 1100 can identify and process secondary advertising packets during the extended advertising phase. Timing information within the packets allows the gateway 1100 to align with the PAwR train configuration, including response slot timing and subevent intervals. This synchronization provides that the gateway 1100 anticipates and processes subsequent packets efficiently, minimizing latency and packet loss.

In an embodiment, the PAwR feature supports scalability by allowing multiple loT devices 1010 to communicate with the gateway 1100 using synchronized time slots. An loT device 1010 can be assigned a specific time slot to transmit or receive data, reducing collision and ensuring orderly communication. The gateway 1100 can thus manage communication with numerous devices in a structured manner, providing for seamless data flow in environments where thousands of devices operate simultaneously. This feature provides that the gateway 1100 maintains an organized communication protocol with the connected loT device(s), aligning data transmission times with the periodic advertising schedule to provide reliable data exchange across the system 100.

In an embodiment, the gateway processor 1102 includes edge connect module 1112 (also referred to as gateway coordination and edge management component 1112 or edge module 1112). The edge connect module 1112 can generate edge configuration data to execute the operations attributed to the edge module 1112. Alternatively, the edge configuration data can be referred to as gateway data directed to operations performed by the edge module 1112. The gateway 1100 may include a dedicated edge module to execute the described functions of the edge module 1112. Alternatively, the processor 1102 can be configured to perform edge connect module 1112 functions.

In an embodiment, the edge connect module 1112 is configured to manage PAwR train configurations, device handoffs, and resource allocation across multiple gateways. Upon receiving an advertising message, the edge connect module 1112 can extract loT device data, including payload data, unique device identifiers, service UUIDs, and security tokens embedded in the advertising packets. The edge connect module 1112 can manage response slot timing and subgroup assignments to coordinate device communication across gateways. Additionally, the edge management functions include filtering, aggregating, and de-duplicating data received from multiple loT devices 1010 participating in PAwR trains. The edge connect module 1112 may execute local rules or event triggers to perform actions specific to PAwR advertising intervals and channel sequence mappings, minimizing reliance on cloud-based decisions. In an embodiment, the edge connect module 1112 is configured to synchronize PAwR synchronization parameters with cloud platforms on the cloud analysis layer 1006 by managing device configurations and reporting periodic updates over network 104.

In an embodiment, the edge connect module 1112 is configured to provide dynamic device onboarding and authentication by managing the exchange of keys and credentials during the initial connection phase. The feature provides that authorized loT devices 1010 can establish connections with the gateway 1100. The edge connect module 1112 can receive the health and availability of connected devices and gateways. In the event of a gateway failure or device timeout, the edge connect module 1112 can initiate failover procedures to reconnect devices to alternative gateways, such as 1200 or 1300.

The edge connect module 1112 can implement predictive algorithms to anticipate potential congestion within PAwR trains based on current usage patterns and historical data. In an embodiment, the edge connect module 1112 manages virtual addressing schemes by assigning virtual MAC addresses (vMACs) to devices and gateways. The virtual addressing supports seamless roaming across multiple gateways 1100, 1200, and 1300 without requiring loT devices to resynchronize response slot timing or reconfigure PAwR subgroup assignments.

In an embodiment, the edge connect module 1112 provides for local monitoring and control of PAwR connections. The edge connect module 1112 continuously monitors the status of connected loT devices 1010 by collecting data packets transmitted over PAwR advertising channels through the loT radio 1110.

In an embodiment, when the edge module 112 identifies a trigger condition from the loT device data requiring immediate action, the edge module 112 transmits control commands in the edge configuration data to the relevant loT device 1010 through the local network 102. For example, if the data received from a sensor indicates an abnormal temperature, the edge module 112 may trigger an actuator connected to the gateway 1100 to open a valve or adjust a thermostat. The execution of the control tasks may bypass the cloud layer to minimize latency and ensure fast response times. The edge configuration data performs control tasks by executing commands to loT devices through the local network 102.

In an embodiment, the edge connect module 1112 triggers event-driven actions based on real-time loT device data received from connected loT devices 1010, such as sensors or actuators. The pre-configured rules, stored locally in the memory 1150, define specific actions for various conditions. For example, if a connected leak sensor detects water, the edge connect module 1112 may trigger a valve actuator to shut off water flow, preventing further damage. The rules can be executed locally by the edge connect module 1112 for low-latency response, bypassing the need for cloud intervention.

The gateway 1100 can maintain event triggers and local rules for PAwR-specific scenarios, stored within memory 1150. The event triggers and rules can be included in configuration data generated by the configuration server 1500 based on user instructions. The configuration server 1500 transmits the configuration data to the gateway 1100, enabling updates to subgroup assignments, advertising train timing offsets, or other PAwR parameters. The operating system component 1106 provides for synchronization of the updates without disrupting ongoing PAwR operations, applying the changes in real-time or during low-traffic intervals. The event triggers allow the edge connect module 1112 to initiate actions autonomously based on predefined conditions. In an embodiment, the edge configuration data generated by the edge connect module 1112 initiates actions autonomously based on predefined conditions and event triggers stored in the memory 1150. The event triggers may include commands such as updating ESL displays with new pricing, adjusting thermostat settings for temperature control, or activating lighting systems based on store occupancy. The gateway 1100 processes and relays the event triggers to the relevant loT devices 1010 through network 102 for immediate execution. The event triggers can also include complex workflows, such as triggering multiple actuators or generating alerts for specific stakeholders when certain thresholds are breached.

The loT radio 1110 captures raw data packets over PAwR advertising channels, including sensor readings and device status updates. The edge connect module 1112 applies filtering algorithms tailored to PAwR advertising trains to reduce unnecessary or redundant information, ensuring efficient processing and communication across the network. For example, the edge connect module 1112 can discard packets that contain repeated sensor data within a short time frame or data that falls outside of predefined ranges. The aggregation process combines multiple readings in the loT device data, such as hourly temperature averages, into consolidated data sets to minimize transmission size and reduce bandwidth consumption.

The edge connect module 1112 can also perform de-duplication by identifying and removing duplicate messages received from multiple gateways and IoT devices to provide a clean dataset before transmission to the cloud analysis layer 1006 over network 104. The edge connect module 1112 can compare packet identifiers, timestamps, and device IDs to detect redundant entries in the loT device data and gateway data.

During protocol translation, the edge connect module 1112 is configured to convert loT device data received from loT devices 1010 in formats relevant to PAwR advertising channels or BLE-based protocols into internet-based protocols, such as MQTT or HTTPS, for the cloud analysis layer 1006. Additionally, the edge connect module 1112 processes incoming configuration data from the cloud analysis layer 1006 to conform to PAwR synchronization parameters, including response slot timing and subevent intervals, before transmitting the configuration data to loT devices 1010.

In an embodiment, the edge connect module 1112 provides for load balancing and resource management across multiple gateways, such as gateway 1100, 1200, and 1300. The edge connect module 1112 can dynamically monitor traffic loads, device connections, and resource availability across the gateways, providing that communication is evenly distributed.

The edge connect module 1112 provides resource management by maintaining channel sequence mapping, PAwR subgroup assignments, and response slot spacing for gateways. The configuration server 1500 can reassign PAwR trains or communication streams to alternative gateways based on reassignment rules embedded in the configuration data. Alternatively, the reassignment rules may be stored locally in the gateways 1100. When an loT device 1010 establishes a connection, the edge connect module 1112 evaluates real-time network conditions, such as group-based response delays or advertising train timing offsets, to determine the optimal gateway. If a gateway experiences congestion, the edge connect module 1112 can initiate a handoff to another gateway, synchronizing the device's PAwR train to ensure uninterrupted communication.

In an embodiment, the gateway 1100 communicates with the configuration server 1500 and application servers 1600, 1700 over the network 104. The cloud-directed data is generated and transmitted by the gateways 1100 to the configuration server 1500 and application servers 1600, 1700. The configuration data is generated and transmitted by the configuration server 1500 to the gateways 1100. The application data is generated and transmitted by the application servers 1600, 1700 to the gateways 1100. User terminals (not shown) can be connected to the configuration server 1500 and application servers 1600, 1700 to receive data for a bidirectional exchange of data between the users and the cloud servers. User terminals may include personal computers, PDAs, smartphones, tablets, or other mobile and desktop computing devices that allow users to access and interact with the network's management and monitoring interfaces.

In an embodiment, the edge connect module 1112 implements predictive routines to anticipate future congestion based on historical traffic patterns generated from loT device data. The predictive routines provide resource reallocation by offloading specific loT devices to less-burdened gateways during peak periods. The predictive routines and resource quotas are included in the configuration data received from the configuration server 1500. The configuration data can be received in real time from the configuration server 1500 or stored locally at the gateways 1100. The resource quotas regulate container management within the gateways, prioritizing critical processes over non-essential processes to maintain operational efficiency.

In an embodiment, the edge connect module 1112 manages firmware and configuration updates for connected loT devices 1010. The configuration data received from the configuration server 1500 can include firmware and configuration updates. The updates may be cached locally at the gateway 1100 to provide availability for deployment during optimal windows based on network traffic, device status, and resource availability. In an embodiment, rollback mechanisms can be implemented by the edge module 1112, providing that if an update fails, the gateway 1100 reverts the device to a previous stable firmware version. Status reports each the update(s) can be sent back to the configuration server 1500 by the gateway 1100 in the cloud-directed data.

In an embodiment, the edge connect module 1112 establishes third-party cloud integration with external platforms, such as third-party application servers 1600 and 1700. The gateway 1100 receives application data from the application servers on the cloud analysis layer 1006. The application data includes application commands, alerts, and triggers, which initiate actions at the edge connect module 1112 or loT devices 1010. For example, the application data may include instructions to adjust thermostat settings or update ESL displays. The application data can be stored locally at the gateways 1100 to allow repeated execution without requiring additional instructions from the cloud. Alternatively, real-time instructions within the application data may be provided to address immediate operational needs.

In an embodiment, the cloud-directed data transmitted by the gateways 1100 to the application servers 1600 and 1700 may include processed loT device data. The processed loT device data includes sensor data, such as temperature readings, leak detection statuses, and energy consumption values. The processed loT device data may further include metadata, unique sensor IDs, timestamps, and battery levels.

In an embodiment, the gateway 1100 receives application data from the third-party application servers 1600 and 1700. The application data may include firmware patches, new operating parameters, or control instructions for target loT devices 1010. The edge connect module 1112 may perform interactions with third-party platforms by running custom vendor-provided agents to handle specific data-processing tasks or protocol translation at the edge.

In an embodiment, the network 108 operates within the network layer 1004, providing communication between gateways 1100, 1200, and 1300. The inter-gateway data is transmitted among the gateways. The inter-gateway data provides that connected loT devices 1010, 1020, 1030, 1040, and 1050 remain continuously operational, even when transitioning between different gateway coverage areas. The inter-gateway data supports the exchange of information between gateways 1100 to manage handoffs and load distribution. The communication over network 108 can utilize Ethernet or Wi-Fi-based LAN protocols, depending on the site's infrastructure. The edge connect module 1112 can generate, process, and communicate the inter-gateway data.

In an embodiment, networks 104 and 106 establish the communication links between the network layer 1004 and the cloud analysis layer 1006. The bidirectional data transmission between the gateways 1100, 1200, 1300 and the configuration server 1500 is provided by the network 104. The bidirectional data transmission between the gateways 1100, 1200, 1300 and the application servers 1600, 1700 is provided by the network 106. The networks 104, 106 can provide either or both local LAN connectivity within the site and uplink connections to the cloud over the public or private internet. The network architecture supports secure communication protocols and efficient data formats, ensuring reliable data transmission with minimal latency.

In an embodiment, the communication over networks 104, 106 is secured using Transport Layer Security (TLS) to protect data from unauthorized access during transmission. The gateways 1100 can initiate encrypted sessions using AES encryption to provide end-to-end data confidentiality and integrity. In an embodiment, authentication tokens or session keys are appended to the data packet(s), providing that authorized devices and cloud services can exchange information.

In an embodiment, the communication provided by the networks 104, 106 from the network layer 1004 to the cloud analysis layer 1006 operates on internet-based protocols, including HTTPS, MQTT, or WebSocket, depending on the application. In an embodiment, the data transmitted over networks 104, 106 undergoes protocol transformation and reformatting at the gateway level to provide compatibility with cloud services. The data can be sent by the gateways 1100 in one or more formats, such as JSON, XML, protobuf, CBOR, or other formats. In an embodiment, compressed data batches are transmitted, reducing bandwidth usage by grouping multiple sensor readings or events into a single payload.

The edge connect module 1112 provides for the aggregation and filtering of processed loT device data sent from the gateways 1100 to the cloud servers. In an embodiment, event-driven messages, such as a temperature anomaly or security alert, are sent to the cloud analysis layer 1006 to reduce traffic. Routine telemetry data, such as environmental metrics, may be batched and transmitted at scheduled intervals to optimize network efficiency.

In an embodiment, custom APIs or vendor-specific platforms, such as Azure loT Hub or AWS loT, are integrated over networks 104, 106 to enable seamless cloud interaction. In an embodiment, network 104 provides cloud-to-gateway communication by transmitting the configuration data from the configuration server 1500 to the gateways 1100. When data from the cloud is formatted for cloud-level transmission, such as in JSON or XML, the data may be reformatted at the gateway level to correspond with the protocols or configurations used by the connected loT devices 1010. For example, configuration data sent in JSON from the configuration server 1500 may be parsed and restructured into BLE-compatible advertising packets or Zigbee commands for delivery to loT devices 1010. In an embodiment, the gateway 1100 applies data compression algorithms during the data reformatting process to reduce overhead within the network layer 1004.

The system 100 includes a cloud analysis layer 1006 (also referred to as services layer 1006 or cloud layer 1006). The cloud analysis layer 1006 interacts with the network layer 1004 and the gateways 1100, 1200, and 1300, receiving aggregated data, transmitting configuration updates, and coordinating operations across the network 100. The cloud analysis layer 1006 comprises of configuration server 1500 and application servers 1600, 1700. The servers may also perform data aggregation and analytics routines on the processed loT device data and cloud-directed data received from the gateways 1100.

In an embodiment, the cloud analysis layer 1006 receives cloud-directed data from the gateways 1100 over networks 104,106 for centralized control and management of the network 100. The cloud-directed data can include processed loT device data, real-time device metrics, status updates, and event-driven messages. The cloud analysis layer 1006 processes the cloud-directed data to generate insights, alerts, or operational recommendations. Configuration data transmitted from the cloud analysis layer 1006 to the gateways 1100 includes configuration changes, firmware updates, and operational rules. The configuration data provides that the loT devices 1010 operate according to predefined policies.

Additionally, any processes, operations, or functions attributed to a specific component of the configuration server 1500 may be performed through the execution of the configuration data generated by the configuration server 1500. Furthermore, the processes, operations, and configurations associated with the components of the configuration server 1500 may be executed as steps in a method for achieving the described functionality.

In an embodiment, the configuration server 1500 operates as the control node within the cloud analysis layer 1006, managing PAwR-specific configurations across gateways 1100, 1200, and 1300 via network 104. The configuration data transmitted by the configuration server 1500 includes parameters such as PAwR train configuration, advertising intervals, channel sequence mapping, and device onboarding policies. The configuration data may also provide operational updates, such as adjustments to response slot timing, synchronization offsets, or event-trigger thresholds. Additionally, the configuration server 1500 can transmit software patches, subgroup reassignment policies, and load-balancing metrics. Upon receiving configuration data, the gateway 1100 applies the instructions locally to loT devices 1010, configuring PAwR subgroup assignments and ensuring synchronized operation. Targeted updates may be directed to specific loT devices 1010 for PAwR timing adjustments or individualized operational modifications. Inter-gateway data ensures consistent application of operational rules, allowing gateways 1100, 1200, and 1300 to manage PAwR trains, load balancing, and device transitions seamlessly.

In an embodiment, the configuration server 1500 includes memory 1522 storing configuration data. The configuration data stored in memory 1522 can be dynamically updated based on network performance and operational requirements. The configuration server 1500 transmits configuration data to the gateways 1100, and the gateways 1100 can cache the configuration data locally. The cached configuration data provides that the gateways 1100 maintain functionality during intermittent cloud connectivity.

The configuration server 1500 can provide secure communication with the gateways 1100 through TLS-encrypted channels and authentication mechanisms.

In an embodiment, the configuration server 1500 receives user instruction data from a connected user terminal (not shown). The user instruction data may include PAwR handoff policies, thresholds for event triggers (e.g., response slot timing discrepancies or synchronization failures), load-balancing configurations, firmware update schedules, and network parameter adjustments such as subgroup assignments or advertising interval modifications. The configuration server 1500 processes and translates the user instruction data into actionable commands, transmitting PAwR-specific configuration data to the connected gateways 1100, 1200, and 1300. The instructions enable real-time adjustments, ensuring that the network remains optimized for efficient PAwR communication across high-density deployments.

The user instruction data can also include modifications to recipes and operational rules, which are stored and managed by the recipe management component 1506. The user instruction data can include updating device profiles, defining new event triggers, or modifying quality of service (QoS) policies for prioritized data transmission. In response, the configuration server 1500 generates device status data including real-time status reports, gateway performance metrics, device health indicators, and logs of executed operations. The device status data can be generated based on the cloud-direct data received from the gateways 1100. The device status data can be transmitted to the user terminal for monitoring.

In an embodiment, the configuration server processor 1502 includes a state configuration engine 1504. The state configuration engine 1504 can generate configuration data to execute the operations attributed to the engine 1504. The configuration server 1500 may include a dedicated state configuration engine 1504. Alternatively, the processor 1502 can be configured to perform the functions the state configuration engine 1504.

The state configuration engine 1504 manages the generation, processing, and distribution of configuration data across gateways 1100, 1200, and 1300. The engine 1504 analyzes real-time cloud-directed data received from the gateways, including monitoring data that comprises device status metrics, performance logs, and alerts. Based on the analysis, the state configuration engine 1504 generates configuration data comprising operational rules, infrastructure updates, and device-specific commands. The configuration data provides adjustments to gateway parameters, such as handoff policies, device onboarding protocols, or load distribution rules, to align with current network conditions.

The state configuration engine 1504 processes user instruction data received from user terminals connected to the configuration server 1500. The user instruction data may modify device rules, update gateway configurations, or create new event triggers.

In an embodiment, the configuration server processor 1502 includes a recipe management engine 1506. The recipe management engine 1506 can generate configuration data to execute the operations attributed to the engine 1506. The configuration server 1500 may include a dedicated recipe management engine 1506. Alternatively, the processor 1502 can be configured to perform the functions the recipe management engine 1506.

The recipe management engine 1506 generates and distributes configuration data comprising predefined operational workflows, known as recipes, to gateways 1100, 1200, and 1300. Recipes define a sequence of tasks or actions that the gateways 1100 and connected loT devices 1010 must execute under specific conditions. A recipe may include instructions for PAwR train configuration, adjustments to PAwR advertising channels, and modifications to response slot timing for synchronized communication. Recipes further include PAwR subgroup assignments and event triggers to enable coordinated actions across multiple gateways and loT devices. The configuration data generated by the recipe management engine 1506 provides gateways with instructions to execute recipes locally, such as initiating automated device onboarding routines, reassigning PAwR subgroups during failover scenarios, or coordinating multi-device response slot spacing to optimize network efficiency.

The recipe management engine 1506 processes user instruction data received from terminals connected to the configuration server 1500, allowing users to modify, update, or create new recipes. The updated recipes are packaged into configuration data and transmitted to the gateways over network 104. The configuration data may provide that the gateways 1100 apply the recipes autonomously in response to predefined conditions detected by the edge module 1112. For example, the edge connect module 1112 may trigger a recipe that adjusts HVAC settings, activates lighting, and sends alerts when occupancy sensors report an increase in store traffic.

The recipe management engine 1506 coordinates recipe synchronization across gateways through inter-gateway data transmitted over network 108. The inter-gateway data includes the status of active recipes, synchronization timestamps, and device allocation changes, providing uniform execution across sites. If a gateway encounters a failure, the recipe management engine 1506 provides for recipe continuity by incorporating failover instructions into the configuration data, allowing neighboring gateways to take over pending tasks without disruption.

In an embodiment, the configuration server processor 1502 includes an edge infrastructure management engine 1508. The edge infrastructure management engine 1508 can generate configuration data to execute the operations attributed to the engine 1508. The configuration server 1500 may include a dedicated edge infrastructure management engine 1508. Alternatively, the processor 1502 can be configured to perform the functions the edge infrastructure management engine 1508.

In an embodiment, the edge infrastructure management engine 1508 generates configuration data to manage the physical and virtual resources deployed at the gateway level, with specific emphasis on PAwR train synchronization parameters. The configuration data includes updates to scanning intervals, adjustments to channel sequence mapping, and PAwR-specific routing parameters.

Inter-gateway data transmitted over network 108 enables the edge infrastructure management engine 1508 to coordinate PAwR-specific infrastructure management tasks among gateways 1100. The inter-gateway data includes PAwR synchronization parameters, resource availability metrics, and active device connections. For example, gateways may share updates on group-based response delays or advertising train timing offsets to maintain synchronization across PAwR advertising channels. The inter-gateway data can also be transmitted to the configuration server 1500 within the cloud-directed data, providing visibility into network conditions and supporting centralized coordination of PAwR operations.

In an embodiment, the configuration server processor 1502 includes an the loT device configuration engine 1510. The loT device configuration engine 1510 can generate configuration data to execute the operations attributed to the engine 1510. The configuration server 1500 may include a dedicated loT device configuration engine 1510. Alternatively, the processor 1502 can be configured to perform the functions the loT device configuration engine 1510.

In an embodiment, the loT device configuration engine 1510 generates configuration data directed to individual loT devices 1010. The configuration data includes loT device-specific parameters such as firmware versions, operational thresholds, and control logic settings, which are transmitted to the gateways 1100 for transmission to the directed IoT devices 1010. The loT device configuration engine 1510 provides that loT device(s) 1010 operates within defined specifications by synchronizing configuration updates with the gateways 1100. The gateways relay the updated parameters to the corresponding loT devices over network 102.

The loT device configuration engine 1510 processes user instruction data received from connected user terminals to customize device configurations based on real-time operational needs. The configuration data may also include adaptive parameters, such as dynamic performance thresholds or event-specific triggers, which the gateways apply to connected devices.

In an embodiment, the cloud application interface 1512 in the configuration server 1500 manages the exchange of application data between the cloud server 1500 and external application servers 1600, 1700 via the network 110. The cloud application interface 1512 may also convert cloud-directed data received from the gateways 1100, such as the processed loT device data, into formats compatible with the application servers 1600, 1700, providing seamless integration with third-party platforms. In an embodiment, the application data is exchanged by the application servers 1600, 1700 with the gateways 1100 via the network 106.

In an embodiment, the memory 1522 in the configuration server 1500 may store user instruction data, configuration data, operational rules, gateway settings, and synchronization schedules for network coordination. The memory 1522 includes a data repository 1524 that maintains comprehensive records, such as historical loT device data, gateway data logs, inter-gateway data, and monitoring data for diagnostic purposes. The data repository 1524 also stores device profiles, state configurations, recipes, and firmware versions to support real-time updates and event-triggered actions. The structured storage allows the configuration server 1500 to retrieve and transmit configuration updates or management instructions efficiently across the network 100.

The cloud layer 1006 includes application servers 1600, 1700 that provide for coordinating cloud-directed data exchanges and supporting interactions with third-party platforms. The application servers 1600 and 1700, shown in the Fig. 1, are illustrative, and a reference to one application server, such as application server 1600, may also cover other servers, such as application server 1700. The application servers are not limited to the specific numbers or configurations shown. In various embodiments, additional or fewer application servers may be deployed depending on the system's architecture or operational requirements.

Additionally, the reference to the subcomponents of one application server can also refer to the corresponding subcomponents of other application servers. For example, a reference to vendor cloud services 1602 in application server 1600 may also refer to vendor cloud services 1702 in application server 1700. Similarly, a reference to enterprise cloud applications 1604 in application server 1600 can refer to enterprise cloud applications 1704 in application server 1700. Further, a reference to Azure services 1606 in application server 1600 can include Azure services 1706 in application server 1700.

Further, any processes, operations, or functions attributed to a specific component of the application server 1600 may be performed through the execution of the application data generated by the application server 1600. The application data generated by any of the component of the application server 1600 provides the instructions or inputs necessary to carry out the operations described. Furthermore, the processes, operations, and configurations associated with the components of the application server 1600 may be executed as steps in a method for achieving the described functionality.

The application server 1600 receives cloud-directed data from gateways, including processed loT device data and monitoring data, to perform real-time analysis, generate operational insights, and issue alerts based on predefined conditions. The application server 1600 generates and transmits application data back to the gateways. The application data includes control commands, event triggers, and updates. The application data generated within the application server 1600 can also be stored locally at the gateways 1100 to allow repeated execution of control operations without requiring new instructions for the task(s), reducing latency and dependency on cloud connectivity.

The application server 1600 can interact with the cloud configuration server 1500 to synchronize operational policies and configuration updates across the network 110.

In an embodiment, the application server 1600 is connected to user terminal (not shown) to provide interfaces for external customers and third-party vendors utilizing IoT devices within the system 100. The application server 1600 processes user instruction data to transmit real-time instructions to gateways 1100 or initiate specific actions at the edge module 1112. The user instruction data may include service requests, operational commands, or configuration preferences provided by customers or vendor systems. The user instruction data can further include tasks such as initiating device-specific operations, adjusting display content on ESLs, scheduling device activities, or requesting analytics reports generated from loT device data. User instruction data processed by the application servers 1600 can trigger operations at the edge connect module 1112 or on loT devices 1010 through gateway communication.

In an embodiment, the application server 1600 includes the vendor cloud services 1602 to enable third-party vendors to interact with the deployed loT device infrastructure. The user instruction data may include commands for adjusting IoT device operations, such as modifying ESL display content or scheduling actuator activities. Upon receiving user instruction data, vendor cloud services 1602 generate corresponding application data. The application data is transmitted to gateways 1100 over network 104, where it is executed either locally by the edge connect module 1112 or relayed to the appropriate loT devices 1010 for operational control.

The vendor cloud services 1602 can generate application data that corresponds with specific vendor-defined protocols or device standards. For instance, application data generated by vendor cloud services 1602 may instruct a gateway 1100 to update a display, initiate environmental changes, or adjust sensor configurations in real-time. Vendor cloud services 1602 also allow third-party systems to maintain consistent interactions with connected loT devices by storing operational settings locally within the gateways, enabling repeated actions without requiring frequent cloud communication.

Vendor cloud services 1602 additionally provide feedback mechanisms by receiving and transmitting user instruction data based on monitoring data received from the loT devices and gateways. The feedback loop allows vendors to track operational performance or detect anomalies across the connected loT devices.

In an embodiment, the application server 1600 includes enterprise cloud applications 1604 configured to provide integration between the loT infrastructure and enterprise-level systems, such as resource planning tools, inventory management platforms, or customer relationship management (CRM) systems. The cloud applications generate application data based on user instruction data received from enterprise systems, which may include commands for adjusting operational workflows, triggering alerts, or synchronizing device activities with enterprise processes. For example, enterprise cloud applications 1604 may generate application data that instructs gateways 1100 to adjust warehouse lighting schedules based on occupancy data or update ESL displays according to inventory levels. The application data is transmitted to gateways 1100 over network 104 for local execution or to be relayed to the appropriate loT devices 1010. Further, the application data may include operational adjustments such as task schedules, sensor configurations, or actuator commands. Monitoring data from loT devices 1010 and gateways 1100 can be processed by enterprise cloud applications 1604 to track performance metrics, inventory statuses, or system anomalies. The monitoring data allows enterprises to monitor key performance indicators and adjust workflows in response to changing operational needs.

In an embodiment, the application server 1600 includes the Azure services 1606, to provide a cloud-based interface that integrates the loT infrastructure with Microsoft Azure's suite of cloud solutions. The Azure services 1606 provide for the exchange of cloud-directed data between gateways 1100 and Azure platforms for advanced data processing, machine learning, or analytics. Azure services 1606 can receive loT device data collected by gateways 1100 and transmit it for analysis within Azure cloud environment, generating actionable insights for predictive maintenance, anomaly detection, or performance optimization. Azure services 1606 can also manage cloud-based automation workflows by processing user instruction data received from user terminals connected to the application server 1600. The user instruction data may include commands for scheduling device actions, configuring sensors, or deploying firmware updates. Application data generated by Azure services 1606 may include task schedules, alert triggers, or optimization routines transmitted to gateways 1100 to initiate operations at the edge.

In an embodiment, an edge management platform (also referred to as the Edge Connect platform or the platform) provides a coordinated, unified, and secure data pipeline for aggregating loT device data from various types of sensors and transmitting control data to loT devices 1010. In an embodiment, Edge Connect platform is implemented by the edge connect module 1112 at the gateway level for management and control of IoT devices 1010. The Edge Connect platform is also implemented at the cloud level within the edge infrastructure management engine 1508, enabling centralized oversight and control across the network.

The Edge Connect platform enables the consolidation of sensor data across a heterogeneous network including loT devices 1010, such as Electronic Shelf Labels (ESLs). The Edge Connect platform can communicate over BLE protocols and coordinating bidirectional communication between the loT devices 1010 and gateways 1100, 1200, and 1300. The Edge Connect platform processes incoming loT device data from sensors, such as leak detectors, occupancy sensors, energy monitors, and temperature sensors, and transmits cloud-directed data to configuration server 1500 and application servers 1600, 1700, thereby providing centralized management and control over a large network of loT devices 1010.

The configuration server 1500 generates configuration data, which includes parameters and properties associated with the connected loT devices 1010. The configuration data allows the configuration server 1500 to coordinate with the edge connect module 1112 to synchronize loT device settings, update operational parameters, and maintain uniform network configurations across multiple gateways.

In an embodiment, the cloud configuration server 1500 provides for a stateful configuration to oversee updates and operational states for connected loT devices 1010 engaged in PAwR communication. The cloud configuration server 1500 generates configuration data, including update schedules, rollout tracking details, and protocols for reassigning PAwR subgroup assignments during device replacements. The stateful configuration enables the cloud configuration server 1500 to dynamically support large-scale deployments, continuously monitoring and updating device states as necessary. In scenarios where errors occur or hardware requires replacement, the state configuration engine 1504 can re-apply stored PAwR train configuration and synchronization parameters to maintain operational continuity and avoid communication disruptions.

Gateways 1100 can be organized into "sites" based on specific deployment locations and configuration requirements, allowing the system 100 to scale effectively across multiple regions or retail settings. A site may comprise of multiple gateways, supporting thousands of loT devices such as electronic shelf labels (ESLs) to facilitate comprehensive network management. Site-specific configurations are achieved through configuration data generated by the state configuration engine 1504, which defines unique settings and operational parameters for gateway(s) within a site. Configuration variables within the configuration data allow individual gateways 1100 to operate with customized settings, optimizing network behavior for distinct use cases across various environments while enabling uniform control over large, distributed device deployments.

### Sitewide Coordination

In an embodiment, the edge connect module 1112 provides for sitewide coordination of the network within system 100. Gateways, such as gateway 1100, 1200, and 1300, are interconnected over network 108. The network enables inter-gateway data exchange, allowing gateways to remain aware of each other's operations and resource states. The edge connect module 1112 within each gateway generated and provide for exchanging the inter-gateway data exchange for coordinated responses to network events.

Gateways 1100, 1200, and 1300 are configured to communicate with cloud servers, including the configuration server 1500 and application servers 1600 and 1700. The cloud servers transmit operational instructions to the gateways in the form of configuration data and application data. For PAwR implementations, the configuration data includes parameters such as PAwR train configuration, PAwR advertising channels, and response slot timing to synchronize operations across the site. Additional configuration data may include channel sequence mapping, subevent intervals, and PAwR synchronization parameters to define actions and policies for managing device communications, optimizing response slot spacing, and mitigating interference. The application data provides instructions or event triggers for specific device control tasks, such as updates to periodic advertising intervals, actuator commands, or adjustments to display content for electronic shelf labels (ESLs). When gateways 1100, 1200, and 1300 receive the configuration data or the application data, the gateways apply them in a synchronized manner, providing that all gateways follow uniform policies implemented consistently throughout the site.

Additionally, the edge connect module generates and transmits the cloud-directed data to the configuration server 1500 and application servers 1600, 1700. The cloud-directed data includes network health data and device monitoring data (collectively referred to as monitoring data). The monitoring data may include performance metrics, device health reports, and connection stability details, providing the cloud servers with real-time insights into network health and device status. The edge connect module within each gateway manages the bidirectional communication, aligning with inter-gateway data to provide that updates are consistently synchronized across all gateways in the system.

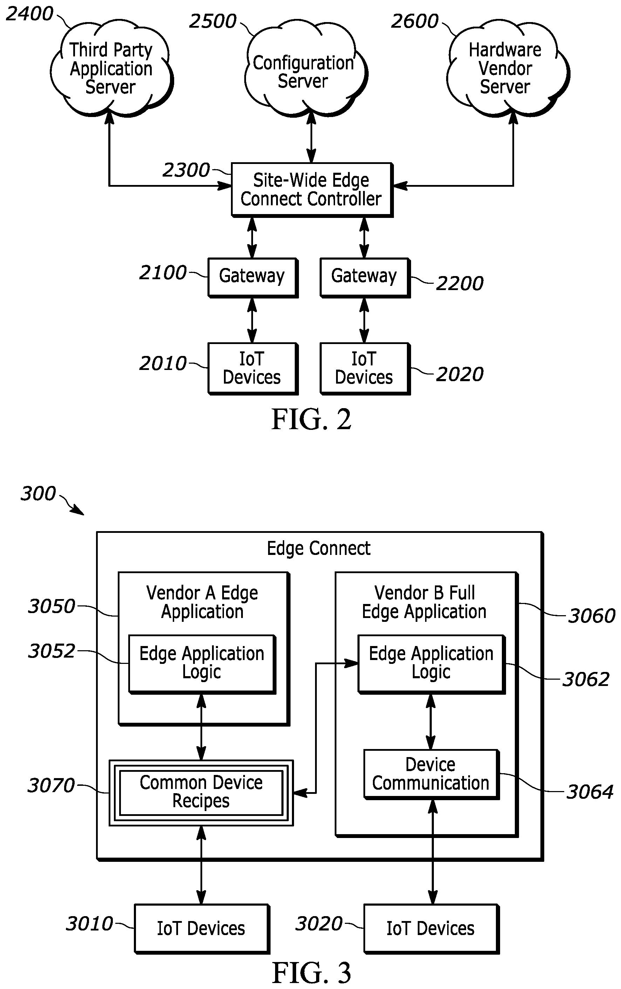

In an embodiment, sitewide coordination for PAwR implementation may be provided by a sitewide controller 2300, as shown in FIG. 2, connected directly to one or more gateways 2100, 2200. The sitewide controller 2300 is configured to coordinate inter-gateway data exchange and synchronize PAwR operational responses across the connected gateways. Alternatively, the sitewide controller 2300 may bypass inter-gateway data exchange and communicate directly with each gateway to provide coordination for PAwR operations. The sitewide controller 2300 centralizes tasks such as distributing PAwR advertising intervals, managing load balancing for PAwR subgroup assignments, and enforcing group-based response delays. By coordinating these operations, the controller provides for the consistent application of PAwR policies throughout the site. Cloud-directed data, such as aggregated network health metrics and PAwR synchronization parameters, can also be transmitted by the controller 2300 to the configuration server 2500 for centralized analysis.

### Coordinating Scanning Parameters

The system 100 provides for coordinated scanning parameters across multiple gateways to optimize advertisement capture from a variety of loT devices including PAwR devices and non-PAwR devices. In an embodiment, the edge connect module 1112 is configured to signal the radio in each gateway to scan for advertising messages within a specific scanning window, aligned with PAwR advertising channels and response slot timing. Each scanning window specifies intervals during which the gateway actively listens on designated PAwR advertising channels within the frequency spectrum. For example, a scanning window might target channels 37, 38, and 39 in the Bluetooth frequency range, aligned with the PAwR advertising train configuration. This PAwR device scanning is coordinated with scanning for non-PAwR devices. For example, while a first gateway is scanning a PAwR advertising channel(s) for PAwR device communications, a second gateway can be coordinated by the scanning parameters to scan for non-PAwR device communications, such as advertisements.

The edge connect module 1112 within each gateway 1100 manages scanning parameters operating with other gateways 1200 and 1300 through inter-gateway data exchange. In an embodiment, the edge connect module in the gateway(s) operates on a preset scanning schedule. The preset scanning schedule includes assignments of PAwR advertising intervals, timing offsets, and advertising channels to each gateway. The schedule is configured such that gateways 1100 in proximity operate on staggered scanning intervals, avoiding overlap in response slot timing and ensuring complete coverage of PAwR subgroup assignments. Proximity between gateways may be determined using grouped virtual MAC (vMAC) addresses. The edge connect modules 1112 leverage this grouped proximity data to coordinate the scanning activities of gateways.

The preset scanning schedule can be transmitted or updated by the cloud configuration server 1500 as part of configuration data or through user instruction data from a user terminal. The configuration server may define PAwR synchronization parameters, such as subevent intervals, advertising train timing offsets, and response slot spacing, to optimize scanning across the site. Gateways 1100 execute the assigned PAwR scanning intervals locally or implement real-time adjustments based on updates received from the server.

For instance, if gateways 1100, 1200, and 1300 are located in the same proximity zone, the preset scanning schedule may allocate staggered intervals as follows: gateway 1100 scans PAwR advertising channel 37 every 20 milliseconds, gateway 1200 scans channel 38 every 25 milliseconds, and gateway 1300 scans channel 39 every 30 milliseconds. Additionally, timing offsets within each gateway's scanning cycle can be applied. For example, gateway 1100 may begin its cycle at the 0-millisecond mark, gateway 1200 at the 5-millisecond mark, and gateway 1300 at the 10-millisecond mark, ensuring optimal separation and minimal interference.

In an embodiment, the edge connect module applies preset deferring criteria to manage service discovery processes within the PAwR implementation. The service discovery process includes identifying PAwR subgroup assignments, aligning device response slots, and configuring communication parameters for connected loT devices 1010. The edge connect module dynamically adjusts service discovery based on real-time network conditions and attributes within the loT device data. For instance, when the module detects a high volume of advertising messages exceeding a predefined volume threshold, specific time-intensive steps, such as detailed PAwR train reconfiguration or secure key exchanges, may be selectively deferred. The prioritization minimizes latency and ensures seamless processing of essential PAwR device connections. The preset deferring criteria may also include device-specific attributes such as priority levels, PAwR subgroup assignments, or battery levels to modify the service discovery process. For example, devices with low battery indicators or non-critical roles may undergo a simplified discovery process, while high-priority devices with critical PAwR subgroup roles may be fully processed.

In an embodiment, the preset scanning schedule organizes gateways 1100 into a grid-like scanning pattern. The preset scanning schedule assigns alternating gateways to distinct PAwR advertising channels and subevent intervals to minimize overlap. For instance, gateways positioned within "primary" zones of the grid are configured to operate with an initial PAwR advertising interval, while gateways in adjacent "secondary" zones initiate scanning or advertising on staggered timing offsets and response slots. The time-based distribution reduces redundant scanning efforts and optimizes resource utilization by balancing PAwR train configurations across the network.

By designating PAwR advertising intervals, response slot timings, and channel sequence mappings to each gateway, the system minimizes overlap, reducing "shadow" networks that could lead to interference or missed advertising packets. The edge connect module 1112 utilize inter-gateway data to dynamically adjust PAwR synchronization parameters, refining scanning patterns and PAwR advertising train timings as the network topology evolves. The adaptive synchronization accommodates changes such as the deployment of new gateways, shifts in loT device activity, or modifications in device density.

In an embodiment, the coordination of PAwR advertising intervals, response slot spacing, and subgroup assignments may be implemented by a centralized sitewide controller 2300, as depicted in FIG. 2. The sitewide controller 2300, connected to one or more gateways 2100, 2200, is configured to coordinate PAwR train configurations and device discovery processes across connected gateways.

### Coordination of Device Connections

In an embodiment, the edge connect modules 1112, 1212, and 1312 within the gateways 1100, 1200, and 1300 are configured to implement preset filtering criteria specifically for PAwR advertising message data received from loT devices 1010. The edge connect module is configured to establish connections with loT devices that meet the preset filtering criteria. The PAwR advertising message data transmitted by loT devices 1010 includes, but is not limited to, Media Access Control (MAC) addresses, virtual MAC (vMAC) addresses, signal strength, device type, firmware version, PAwR synchronization parameters, battery status, service UUIDs, subgroup assignments, operational state indicators, and other device-specific characteristics. The PAwR loT device data enables the edge connect module to differentiate between devices and prioritize connections based on operational requirements, PAwR train configurations, and sitewide coordination. In an embodiment, the edge connect module is configured to respond to PAwR advertising messages to establish connections exclusively with devices meeting the preset filtering criteria. For example, filters based on MAC addresses or vMAC addresses allow the edge connect module 1112 to differentiate between authorized and unauthorized devices.

The preset filtering criteria include applying a minimum signal strength threshold to PAwR advertising messages. For example, upon receiving a PAwR advertising message, the edge connect module verifies whether the loT device exhibits a signal strength above the threshold. The signal strength threshold criteria can be received from the cloud configuration server 1500 as part of the PAwR configuration data and stored locally at the edge connect module 1112 for execution. Alternatively, the signal strength threshold can be dynamically adjusted by the cloud configuration server 1500 based on real-time PAwR synchronization parameters, device density, or environmental conditions. For instance, higher thresholds may be applied to channels experiencing elevated noise levels or channel congestion.

In an embodiment, the filtering criteria include vMAC addresses assigned to loT devices 1010 for PAwR-specific coordination. vMAC addresses act as virtual identifiers, enabling gateways to manage device connections dynamically within PAwR trains. The edge connect module 1112 may locally assign unique vMACs to loT devices based on predefined PAwR rules. The PAwR rules can be updated based on user instruction data from the configuration server 1500, allowing modifications to vMAC assignment protocols, such as adjusting address ranges or prioritizing specific devices. Alternatively, the cloud configuration server 1500 can manage vMAC assignments remotely, transmitting updated PAwR configuration data to the edge connect module for real-time adjustments. The vMAC addresses provide virtual addressing flexibility and facilitate seamless coordination within PAwR environments.

The edge connect module 1112 may assign virtual MAC (vMAC) addresses to radios within the gateway or loT device infrastructure. In one embodiment, these vMAC addresses are allocated to "virtual radios," which may be implemented using individual radios or combinations of radios within the gateways or loT devices. A single physical radio can support multiple virtual radios through the assignment of multiple vMAC addresses. A single vMAC address may correspond to an individual radio or a set of radios within a gateway.

In an embodiment, the preset filtering criteria are implemented locally by the edge connect module 1112 within gateways for managing PAwR advertising messages. The edge connect module 1112 may store and apply the filtering criteria to incoming PAwR advertising messages, evaluating attributes such as signal strength, subgroup assignments, and response slot timing. The preset filtering criteria can be updated dynamically based on PAwR configuration data or user instruction data received from the cloud configuration server 1500. Alternatively, the filtering process may operate through a unified communication interface involving both the edge connect module 1112 and the cloud configuration server 1500. The cloud configuration server 1500 may transmit updated PAwR filtering criteria in real-time, including revised thresholds or response slot assignments, enabling the edge connect module 1112 to adapt its filtering rules dynamically. Inter-gateway data provides synchronized application of filtering criteria across gateways, ensuring uniform implementation of PAwR-specific rules.

In an embodiment, the edge connect modules 1112, 1212, and 1312 within gateways 1100, 1200, and 1300 coordinate the application of preset filtering criteria for PAwR connections. The filtering criteria evaluate incoming PAwR advertising messages based on attributes such as vMAC address designation, signal strength, proximity data, and PAwR synchronization parameters. When multiple gateways receive identical PAwR advertising messages, the filtering criteria determine the optimal gateway for connection based on attributes like subgroup assignments, response slot spacing, or proximity to the loT device. For example, in instances where multiple gateways detect the same PAwR advertising message, the edge connect modules prioritize the gateway receiving the strongest signal or aligned with the lowest interference on its PAwR advertising channel. Proximity may be determined based on grouped vMAC addresses or pre-stored mapping data correlating gateways to PAwR advertising zones.

In an embodiment, the preset filtering criteria may include a cached history of preferred or previous connections between loT devices and gateways. For example, when multiple gateways receive a PAwR advertising message from the same device, the connection may be prioritized with the gateway that previously handled the device's PAwR train. Cached history may include subgroup assignments, response slot timing, and PAwR synchronization parameters. The connection data can be stored within the gateways or the cloud configuration server 1500, allowing retrieval during subsequent service discovery processes. The edge connect module leverages the cached data to bypass redundant steps in the PAwR connection process, streamlining discovery for devices with similar configurations. Cached PAwR train configurations can also be synchronized among gateways via inter-gateway data, ensuring consistency in device handoffs or failovers.

In an embodiment, the cloud configuration server provides PAwR configuration data to adjust the edge connect module's service discovery protocols. The PAwR configuration data may include updated filtering thresholds, adjusted subgroup assignments, or modified response slot spacing. The parameters allow the edge connect module to optimize PAwR train configurations under varying network conditions. Additionally, inter-gateway data can facilitate coordination of PAwR service discovery adjustments across multiple gateways, ensuring that uniform criteria and caching techniques are consistently applied throughout the network.

The inter-gateway data stream enables synchronization among gateways 1100, 1200, and 1300, allowing edge connect modules to share PAwR connection status, operational metrics, and filtering updates in real time. For example, when an IoT device begins broadcasting a PAwR advertising message, the edge connect modules evaluate the attributes of the message, including signal strength and subgroup assignment, and designate the most suitable gateway based on the preset filtering criteria. The selected gateway establishes the PAwR connection, while other gateways halt their connection attempts to prevent redundancy. Inter-gateway data enables dynamic adjustments to the preset filtering criteria based on PAwR-specific parameters, such as advertising train timing offsets or channel sequence mapping.

By coordinating these vMAC assignments across gateways 1100, 1200, and 1300, the edge connect module 1112 ensures that gateways in proximity do not initiate redundant connections to the same loT device 1010.

In an embodiment, the edge connect module 1112 is configured to suspend the service discovery process for a gateway when suspension criteria are met. Suspension criteria include technical thresholds based on gateway health data or device health data. Examples of suspension criteria include exceeding gateway CPU utilization thresholds, suboptimal PAwR synchronization, memory consumption limits, or high retry rates within response slots. For device-specific metrics, suspension criteria may include volume of advertising messages, low received signal strength in PAwR subgroup assignments, missed response slots, or abnormal advertising intervals. The suspension criteria may be pre-configured and stored locally within the gateway or dynamically updated through configuration data received from the cloud configuration server 1500. The edge connect module 1112 continuously monitors gateway health data and device health data against the suspension criteria. Upon detecting a parameter that meets or exceeds these thresholds, the edge connect module 1112 generates and applies a suspension signal. The suspension signal may halts parts of the service discovery process, such as scanning for new PAwR advertising messages or processing device configurations. In another embodiment, when suspension criteria are met, the edge connect module 1112 selectively postpones specific sections of the service discovery process or PAwR device data processing that are resource-intensive. For example, processes such as secure key exchanges, detailed capability inquiries, or authentication checks requiring significant processing time may be deferred.

In an embodiment, the edge connect module 1112 may terminate existing device connections through the application of a filtering signal. The filtering signal halts communication with IoT devices exhibiting degraded health metrics, such as persistent errors in response slot timing or irregular PAwR subgroup participation. The filtering signal is dynamically generated and applies directly to the specific loT device.

In an embodiment, the cloud configuration server 1500 diagnoses gateway health data and device health data received from the gateway to determine if suspension criteria are satisfied. Upon identifying such conditions, the cloud configuration server 1500 transmits either a suspension signal or a filtering signal to the gateway.

In an embodiment, the coordination of device can be implemented within an architecture that utilizes a centralized sitewide controller 2300, as illustrated in FIG. 2, connected to multiple gateways 2100, 2200. The sitewide controller 2300 includes an edge connect module, which provides centralized sitewide coordination by managing and applying the preset filtering criteria across connected gateways. The configuration allows the sitewide controller to coordinate device connection activities by communicating directly with each gateway instead of inter-gateway data exchanges. The centralized architecture allows the sitewide controller to act as a central node for implementing operational rules, obviating the need for inter-gateway data synchronization by performing the coordination within the controller 2300 itself.

### Network Health and Device Monitoring Data

In an embodiment, the edge connect module 1112 is configured to generate network and device health data.

In an embodiment, the edge connect module 1112 receives PAwR advertising data from loT devices operating within configured PAwR advertising channels. The edge connect module 1112 processes the received data to generate device health data associated with loT devices. The generation of device health data includes extracting diagnostic parameters, such as response slot timing, signal strength fluctuations, and synchronization status within the PAwR train. For example, the edge connect module 1112 may analyze response slot timing deviations to detect communication delays or evaluate signal-to-noise ratios across PAwR advertising channels to identify potential interference. In another embodiment, the edge connect module 1112 compares loT device data against predefined thresholds or historical baselines of PAwR-specific diagnostic parameters stored locally or received from the configuration server 1500.

In an embodiment, either of the server(s) 1500, 1600, or 1700 may receive PAwR advertising data or diagnostic metrics from gateways. The server(s) may generate device health data by extracting PAwR-specific diagnostic parameters, such as subgroup assignment success rates, response delays, or advertising train offsets.

The data values corresponding to PAwR-specific diagnostic parameters, when extracted, may define the device's health data. The parameters may include signal strength, response slot usage efficiency, synchronization consistency, battery status, and advertising message throughput. Additionally, metrics such as subevent interval deviations, group-based response delays, and response slot timing irregularities can be tracked for proactive device maintenance. Static or inactive values within PAwR data fields (e.g., repeated subgroup mismatches) may indicate the need for diagnostics or maintenance. Further metrics may include PAwR train reconfiguration frequency or the number of missed subevents.

In an embodiment, the edge connect module 1112 is configured to generate gateway health data representing operational performance and status of a gateway.

In an embodiment, the edge connect module 1112 processes gateway data, including channel sequence mapping, response slot spacing usage, and overall synchronization accuracy within PAwR trains, to generate gateway health data. For example, the edge connect module 1112 may monitor queued advertising train assignments or subgroup response latencies to identify congestion. Gateway health data is compared against predefined thresholds or baselines received as configuration data from the server 1500. This comparison ensures that operational deviations, such as reduced response efficiency or channel allocation conflicts, are promptly detected.

In an embodiment, either of the server(s) 1500, 1600, 1700 may receive gateway data from the gateway(s). The server(s) may process the gateway data to generate gateway health data by extracting gateway diagnostic parameters from the gateway data.

The data values corresponding to the gateway diagnostic parameters of a gateway, when extracted from the gateway data, may define the gateway's health data representing diagnostic metrics specific to the operational status of the gateway. The gateway diagnostic parameters may include one or more parameters such as CPU utilization, memory usage, active connection counts, packet loss rates, PAwR train timing offsets, signal-to-noise ratios, retry rates, channel utilization, response times, error logs, and uptime metrics. Additional indicators may include thermal metrics (e.g., temperature monitoring of the gateway hardware), frequency of device reassignments, and data throughput statistics. By extracting and processing these diagnostic parameters, the edge connect module 1112 or the server(s) provide insights into the operational health and performance of individual gateways, allowing for targeted diagnostics and proactive maintenance.

In an embodiment, the server 1500 is configured to generate network health data by aggregating device health data and gateway health data. The server 1500 processes aggregated datasets to create a unified view of the network's performance. Aggregation includes correlating shared data attributes, such as timestamps or proximity zones, to identify concurrent anomalies or trends across devices and gateways. For example, timestamp correlation may reveal simultaneous synchronization losses across multiple gateways within a PAwR train.

The generation of network health data comprises extracting network diagnostic parameters from the aggregated device health data and gateway health data by correlating shared attributes such as timestamps, geographic zones, or connectivity states. The server 1500 compares the extracted parameters against historical performance baselines and predefined thresholds to detect anomalies indicative of network issues. For instance, the server 1500 may analyze trends in latency, signal strength fluctuations, or error rates across devices and gateways to identify deviations from expected behavior. Trends such as rising subgroup reassignments or increased retry rates across PAwR advertising channels may indicate interference or misconfigurations.

The network diagnostic parameters extracted from the aggregated data represent metrics indicative of overall network performance. The network diagnostic parameters may include total data throughput, connection stability across the network, average signal-to-noise ratio (SNR), frequency of device-to-gateway reassignments, retry rates, cumulative error logs, cumulative connection failures, average and peak latency across gateways, gateway resource utilization percentages, and traffic density trends. Environmental factors affecting network performance, such as localized interference patterns or variations in spectral usage, may also be identified. Spectral capacity includes a gateway or access point's ability to manage concurrent data transmission within its designated frequency band. The server 1500 may further provide network health data to application servers 1600, 1700, or user terminals for actionable insights, predictive maintenance, and real-time monitoring of the loT network.

The network health data can be generated at an individual gateway level such as network health data for gateway 1100. The network health data may also reflect an overall assessment of network conditions across all gateways. To generate network health data, the edge connect modules 1112 can aggregate the inter-gateway data exchanged between gateways 1100, 1200, and 1300. Additionally, inter-gateway data provides for generating device monitoring data by sharing metrics related to individual loT device performance and connectivity state across gateways.

In an embodiment, the coordination and generation of network health data and device monitoring data can be implemented by a sitewide controller 2300, as shown in FIG. 2, connected to one or more gateways 2100, 2200. Instead of gateway(s) aggregating inter-gateway data independently, the controller 2300 centralizes the collection and analysis of network metrics, such as packet loss, latency, signal strength, and device connectivity stability, which it receives from each gateway. The setup allows the controller 2300 to assess network health and device performance comprehensively across the entire deployment by compiling and analyzing real-time data received from the connected gateways. Network health and device monitoring data can be received and coordinated by the controller 2300, which then synchronizes updates and relevant monitoring insights with the configuration server 2500 or third-party application server 2400. Alternatively, the monitoring functions can be implemented locally at the gateway level, based on preset criteria received from the controller 2300.

### Handoff Routine

In an embodiment, the edge connect module 1112 in gateway(s) 1100 is configured to implement a handoff process for the source gateway that meets or exceeds the suspension criteria. The handoff process includes transferring an loT device connection from the source gateway to a target gateway. Handoff enables the edge connect module to modify or reconfigure the network in response to the gateway health data of the source gateway meeting or exceeding the suspension criteria. The handoff routine includes initiating reassignment of the loT device connection or the PAwR train configuration. During the handoff, device(s) can maintain uninterrupted communication by coordinating actions among gateways using inter-gateway data exchange and virtual MAC (vMAC) address management.

The handoff routine is executed by the edge connect modules synchronized across the gateways through inter-gateway data exchange. The target gateway can be either pre-designated within the handoff routine or dynamically selected based on target gateway selection parameters such as current load capacity, proximity to the loT device, received signal strength, device communication history, and available spectral resources. Within the handoff routine, the edge connect module initiates the transfer of device details from the source gateway to the target gateway. The device details includes PAwR train configurations, vMAC addresses, timing data, specific loT device identifier(s), identifier(s) associated with a group of loT devices, encryption keys, communication states, device status indicators, and protocol versions necessary for the seamless continuation of the device connection.

The device details is transferred via inter-gateway data from the source gateway to the target gateway, enabling the target gateway to adopt the device's previous connection state. The device details may include PAwR synchronization parameters such as timing information for periodic advertising trains, subevent intervals, response slot timing, channel sequence mapping, PAwR subgroup assignments, and advertising train timing offsets. For example, the target gateway, upon receiving device details, will broadcast or assume the vMAC address of the source gateway, which enables the loT device to recognize the connection seamlessly. The edge connect module is configured to update the target gateway to adopt the vMAC address previously used by the source gateway. The vMAC address, associated with one or more physical or virtual radios in the gateways, is used as a persistent device identifier, providing continuity by allowing the device to remain unaware of the change in gateway connection. The handoff routine obviates the need for reconnection or reconfiguration by the device, maintaining a continuous data exchange without requiring the device to reinitiate connection protocols.

In an embodiment, the handoff routine within the edge connect module applies preset filtering criteria and other selection parameters to identify the target gateway for the handoff based on factors such as signal strength, proximity, cached connection history, or available resources. The selected target gateway then processes the received device details, enabling the target gateway to establish and maintain a seamless connection with the loT device. The handoff process may be coordinated and processed either locally within the gateways or centrally through the cloud configuration server, depending on the sitewide configuration.

In another embodiment, the suspension criteria are based on predictive handoff criteria directed to pre-emptively mitigate potential network congestion or degradation. The predictive handoff criteria are based on one or more of PAwR synchronization parameters, network health data, gateway health data, or device health data to forecast impending load imbalances or network strain that could affect connection stability. For instance, if a source gateway's resource usage patterns or signal quality metrics indicate a likely drop in service quality, the edge connect module may initiate handoff pre-emptively, thus averting terminal network conditions such as packet loss, latency spikes, or signal dropouts.

In an embodiment, the selection of a subset of loT devices to hand off from one gateway to another during load balancing may be based on a set of predefined parameters evaluated by the synchronized edge connect modules. The predefined parameters can include criticality or priority levels assigned to specific devices, which are based on stored values indicating their operational importance within the network. The predefined parameters can include device classification to prioritize handoff for devices belonging to high-demand categories, such as Electronic Shelf Labels (ESLs) or sensors in critical monitoring zones. The predefined parameters can include reassessed signal strength measurements, such as RSSI with selected loT devices showing better signal strength at the target gateway prioritized for reassignment. The predefined parameters can include Quality of Service (QoS) metrics such as latency sensitivity and packet transmission rates, historical mobility patterns of the devices and battery levels.

In an embodiment, handoff coordination can be implemented in an architecture including a centralized sitewide controller 2300, as shown in FIG. 2, which is connected to one or more gateways, such as gateways 2100 and 2200. The sitewide controller is configured to receive gateway health data and device health data from the gateways or generate gateway health data. Upon determining that a suspension criteria is met by a gateway, the sitewide controller initiates the handoff process by transferring the device details from the source gateway to the target gateway.

Referring now to FIG. 2, shown therein is an illustrative block diagram of the loT wireless network management system 200, according to an embodiment.

The loT devices 2010 and 2020 are endpoint devices within the network, configured to transmit environmental data or receive control commands through protocols such as BLE or Zigbee. The loT devices 2010 and 2020 can include sensors, actuators, display modules, and other specialized components depending on the application. The operational behaviors, components, sub-components, and descriptions of loT devices 1010 in FIG. 1 can apply to loT devices 2010 and 2020 in FIG. 2.

The gateways 2100 and 2200 operate as intermediary network nodes or access points between loT devices 2010, 2020, and cloud-based servers. The gateways 2100 and 2200 may partially provide for data aggregation, protocol translation, and initial data processing at the edge. Similar to gateways 1100 in FIG. 1, gateways 2100 and 2200 facilitate bidirectional data flow between the perception layer and cloud servers. The functionalities, hardware, and processes attributed to gateways 1100 in FIG. 1, including data aggregation, local processing, and protocol harmonization, may also apply to gateways 2100 and 2200. However, in the present embodiment, the edge connect functionality of edge connect module 1112 in gateway 1100 in FIG.1 is centralized within the sitewide edge connect controller 2300 (also referred to as sitewide controller 2300 or controller 2300). The sitewide controller 2300 is communicatively connected to multiple gateways. The sitewide controller 2300 may be connected to the gateways in a variety of network deployments, for example, in star topology. The sitewide controller 2300 oversees connectivity and resource management across all gateways 2100, 2200.

In an embodiment, the sitewide controller 2300 includes an edge connect module (not shown). The edge connect module in the sitewide controller 2300 is configured to perform the processing operations and functions conducted by the edge connect module 1112 within individual gateways. The functions of the edge connect module can be executed by a processor within the controller 2300 or by the controller 2300 itself. By integrating the edge connect functionality within a single controller, the system 200 provides unified edge management across gateways 2100 and 2200. The controller 2300 provides for consolidated and efficient handling of loT device onboarding, data filtering, de-duplication, load balancing, and handoff management from a single control point. Instead of gateway(s) independently managing these functions, controller 2300 is connected to the gateway(s), allowing the controller 2300 to execute the functions in a coordinated manner across all connected gateways.

The controller 2300 connects to one or more gateways 2100, 2200. The edge connect module within controller 2300 adapts to the centralized operation by dynamically interacting with gateway(s). The sitewide edge connect controller 2300 operates as a central node for implementing the edge connect functionality across the system 200.

The controller 2300 can manage the onboarding process for new devices, apply load balancing by redistributing loT device connections among gateways 2100, 2200, and coordinate seamless handoffs for devices transitioning between coverage areas. The edge connect module operates as a single point of edge management, and reduces the redundancy associated with distributing edge functions across multiple gateways 2100, 2200.

The sitewide controller 2300 is configured to manage operations across multiple gateways, such as gateways 2100 and 2200, by transmitting coordination signals to the gateways to provide synchronized device management and network functionality. The sitewide controller 2300 receives gateway data from the gateways 2100 and 2200, which may include metrics such as device connection states, signal strength reports, and operational performance data. Based on the gateway data, the sitewide controller 2300 may transmit coordination signals to the gateways. The coordination signals provide instructions to the gateways to modify their scanning parameters, adjust device connection parameters, or execute specific operational protocols. For example, a coordination signal may specify non-overlapping scanning schedules for gateways based on a preset scanning schedule. IoT device data received by the gateways from loT devices is processed into gateway data, which is then aggregated and transmitted to the sitewide controller. The bidirectional exchange of data provides seamless integration between the loT devices, gateways, and the sitewide controller.

The sitewide controller 2300 also communicates with external cloud servers, such as the cloud configuration server 2500 and application servers 2400, 2600. The controller 2300 generates cloud-directed data, which includes aggregated network health data and operational metrics from the gateways. The cloud-directed data is transmitted to the cloud configuration server to provide real-time insights into network performance. Configuration data transmitted by the cloud configuration server 2500 to the controller 2300 may include operational rules, updated scanning intervals, or device allocation instructions. Similarly, application data from third-party application servers 2400, received by the controller 2300, may include event triggers or device-specific commands. User instruction data, transmitted from a user terminal to the cloud configuration server or application servers, may further modify the configuration or application data.

Any function attributed to the sitewide controller may be implemented by transmitting coordination signals to the gateways. Similarly, any action caused by one component to another is performed by transmitting data between the components. For instance, gateways can update the sitewide controller on the network status by transmitting gateway data. IoT devices can provide operational parameters or device-specific metrics to the gateways by sending loT device data. The cloud configuration server can instruct the sitewide controller by transmitting configuration data. The user instruction data from a user terminal may be transmitted to the cloud servers to define specific operational rules or preferences. The data exchanges form the basis of interactions between components, providing the necessary instructions, updates, or metrics to perform the described functions dynamically and in a coordinated manner.

The controller 2300 can dynamically reallocate loT devices 2010, 2020 between gateways 2100, 2200 based on real-time conditions, providing optimal resource utilization and reducing network congestion. For example, if gateway 2100 reaches its capacity limit, controller 2300 can redirect new devices to gateway 2200, balancing the load across the network and maintaining efficient data transmission.

The configuration server 2500 generates and transmits configuration data to the sitewide edge connect controller 2300. The configuration data includes operational rules, handoff coordination parameters, firmware updates, and load balancing policies. By sending configuration data to the controller 2300, the configuration server 2500 enables consistent application of configurations across gateways 2100, 2200, providing that all connected devices operate under synchronized policies and configurations. The centralized data flow improves scalability and simplifies network management for large-scale deployments. The configuration server 2500 can perform functions and include components similar to the configuration server shown in FIG. 1, with adjustments to interact with the controller 2300. The configuration data generated by configuration server 2500 may be consistent with the configuration data of FIG. 1. The configuration data is directed specifically to the controller 2300. The controller 2300, in turn, implements the configuration data across gateways 2100 and 2200, ensuring coordinated and synchronized management across the network.

The sitewide controller 2300 may receive user instruction data from configuration server 2500 or other connected cloud platforms, such as third-party application server 2400. The user instruction data may include network configurations, device handoff policies, and device-specific operational commands. By managing handoff processes across gateways, controller 2300 reduces downtime during device transitions. The user instruction data may be similar to the user instruction data described in FIG. 1. The user instruction data can be transmitted from the cloud servers to the controller 2300. The controller 2300 then implements the user instruction data on the gateways.

In an embodiment, the configuration server 2500 can be connected to a user terminal (also referred to as user edge direct terminal) to provide a direct interface for system administrators or authorized users to access and manage the network in real time. The user terminal may be similar to the user terminal described in FIG. 1. The users can monitor network health, configure operational parameters, and deploy updates or patches from the user edge direct terminal. The interface can also be used to input user instruction data, such as device-specific configurations, network policies, or event triggers. The user instruction data can be translated by the configuration server 2500 into actionable configuration data. By enabling a real-time link between the user terminal and the configuration server 2500, the system 200 allows for responsive network adjustments, troubleshooting, and remote diagnostics, offering comprehensive control over the sitewide operations managed by the edge connect module within the sitewide edge connect controller 2300.

The controller 2300 aggregates the monitoring data including device health metrics, performance data, and diagnostic logs received from the connected gateways 2100, 2200. The controller 2300 transmits the monitoring data to the configuration server 2500 for centralized analysis. The consolidated view of network operations allows the configuration server 2500 to adjust configurations dynamically based on real-time network insights, enabling predictive maintenance, load adjustments, and rapid fault resolution. The sitewide controller reduces redundancy in data processing, optimizing network efficiency. Local processing of loT device data and the monitoring data can also be performed at the controller 2300 based on predefined rules. The controller can make immediate adjustments and optimizations independently of the configuration server 2500.

The third-party application server 2400 and hardware vendor server 2600 serve as external integration points within the loT network, providing connectivity to third-party applications and vendor-specific services. The servers 2400, 2600 may perform functions analogous to servers 1600, 1700 of FIG.1., such as receiving processed loT device data from gateways via the controller 2300 and generating application-specific commands. The third-party application server 2400 can provide external application interactions. The hardware vendor server 2600 can provide hardware-related configurations, such as firmware updates and diagnostics.

In an embodiment, security protocols are implemented within the sitewide edge connect controller 2300 to provide consistent data protection across the network. The controller 2300 manages authentication and encryption processes, providing secure data exchanges between gateways, cloud servers, and third-party services, such as application server 2400 and hardware vendor server 2600. Additionally, the centralized architecture improves interoperability with external platforms, enabling the controller 2300 to implement standardized protocols and security measures across the entire network.

In an embodiment, the edge connect module within the sitewide edge connect controller 2300 performs data filtering and formatting operations. As loT device data is received from loT devices 2010, 2020 through gateways 2100, 2200 to the controller 2300, the edge connect module applies filtering algorithms to remove redundant, incomplete, or unnecessary data, ensuring that relevant information is processed further. The streamlined data is then formatted into a standardized structure compatible with cloud-directed data protocols. In an embodiment, the gateways 2100, 2200 function as initial access points, providing data aggregation and routing capabilities as well as API support for external applications. Additionally, gateway(s) can relay data over TLS/TCP protocols to maintain secure data streams to the controller 2300.

In an embodiment, the edge connect module in the controller 2300 provides cloud configurable data processing, secure cloud integration, and distributed radio management. Cloud configurable data processing includes applying specific processing rules based on operational requirements or predefined rules, such as aggregating sensor data for analysis or preprocessing data to detect anomalies. For secure cloud integration, the edge connect module implements end-to-end encryption, enabling secure data exchanges with cloud-based servers like configuration server 2500. The distributed radio management coordinates radio resources across gateways 2100, 2200 to reduce interference and maintain stable connections with loT devices. The radio management includes controlling scanning intervals, frequency adjustments, and power settings at gateway level to ensure optimized, interference-free communication across the network. The gateways 2100, 2200 thereby function as localized radio nodes, while the controller 2300 maintains centralized oversight for seamless, distributed radio operations across the site.

The edge connect module can provide a unified connectivity function for seamless communication across distributed radio hardware, such as wireless access points (APs), dedicated loT gateways, or wireless bridges. The unified connectivity function can be implemented either on-premises or within a cloud-based architecture. The edge connect module coordinates communication with wireless devices across multiple use cases and protocols. For instance, the distributed radios in the gateways can communicate with Electronic Shelf Labels (ESLs) using Bluetooth Low Energy (BLE) 5.4 within the 2.4 GHz industrial-scientific-medical (ISM) band.

In certain implementations, the unified connectivity function is connected to an instance of edge direct routine of the edge connect module. The edge direct routine manages configuration settings and operational parameters for devices within the network. The integration enables the unified connectivity function to dynamically adjust configurations and apply policies across the distributed radio hardware, enhancing network adaptability and control.

The numbers of components shown in FIG. 2, including the sitewide edge connect controller 2300, IoT devices 2010, 2020, gateways 2100, 2200, and the external servers such as configuration server 2500, third-party application server 2400, and hardware vendor server 2600, are illustrative and not intended to be limiting. In practical deployments, there can be additional instances of component(s), with multiple controllers, IoT devices, gateways, and servers deployed based on the specific requirements of the environment. For example, a large-scale retail deployment might include numerous sets of gateways connected to respective controllers. A controller can be connected to other controllers, for example in mesh topology. Additionally, or alternatively, the controllers may be synchronized by means the cloud configuration server connected to controller(s). Similarly, additional servers can be integrated to manage higher volumes of data, provide redundancy, or support specialized functions within the network.

### Sitewide Coordination

In an embodiment, the sitewide controller 2300 provides centralized coordination for the network. The sitewide controller is connected to gateways, such as gateway 2100, 2200, enabling the aggregation and synchronization of gateway operations. Gateways 2100, 2200 communicate with cloud servers, including the configuration server 2500, application server 2400, and hardware server 2600, through the sitewide controller. The sitewide controller 2300 can receive operational instructions from the cloud servers in the form of configuration data and application data, which it then distributes to the gateways. For PAwR implementations, the configuration data includes parameters such as PAwR train configuration, PAwR advertising channels, and response slot timing to ensure sitewide synchronization. Additional configuration data may include channel sequence mapping, subevent intervals, and PAwR synchronization. Additionally, the sitewide controller aggregates and transmits cloud-directed data to the configuration server 2500, application server 2400, and hardware server 2600. The cloud-directed data includes network health data and device monitoring data. This monitoring data enables cloud servers to access real-time updates on network health and device status.

The sitewide controller 2300 provides for coordinated scanning parameters across gateway(s) to optimize advertisement capture from a variety of loT devices, including those operating within PAwR trains and non-PAwR devices. In an embodiment, the sitewide controller 2300 signals gateway(s) to scan for advertising messages during specific scanning windows aligned with PAwR advertising channels and response slot timing. Each scanning window provides intervals during which a gateway actively listens on designated PAwR advertising channels within the frequency spectrum.

In an embodiment, the sitewide controller 2300 operates on a preset scanning schedule. The schedule is configured to stagger scanning intervals among nearby gateways, avoiding overlap in response slot timing and ensuring complete coverage of PAwR subgroup assignments. The sitewide controller 2300 can generated scanning signals based on grouped virtual MAC or vMAC addresses of the devices to determine the proximity between gateways and orchestrate their scanning activities.

In an embodiment, the sitewide controller 2300 applies preset deferring criteria to manage service discovery processes within the PAwR implementation. The controller synchronizes the service discovery processes across gateways by providing real-time updates on deferring thresholds, PAwR synchronization parameters, and timing adjustments. The service discovery process includes identifying PAwR subgroup assignments, synchronizing device response slots, and configuring communication parameters for connected loT devices 2010, 2020. The sitewide controller 2300 dynamically adjusts service discovery based on real-time network conditions and attributes within the loT device data. In an embodiment, the preset scanning schedule organizes gateways into a grid-like scanning pattern.

In an embodiment, the sitewide controller 2300 is configured to implement preset filtering criteria on the PAwR advertising message data received from loT devices 2010, 2020. The sitewide controller coordinates the application of preset filtering criteria across gateways 2100, 2200 to establish connections with loT devices that meet the preset filtering criteria. The PAwR loT device data enables the sitewide controller to differentiate between devices and prioritize connections based on operational requirements, PAwR train configurations, and system-wide synchronization. In an embodiment, the sitewide controller transmits instructions to the gateways to respond to PAwR advertising messages exclusively for devices meeting the preset filtering criteria. The preset filtering criteria include applying a minimum signal strength threshold to PAwR advertising messages. For example, upon receiving a PAwR advertising message, the sitewide controller evaluates the signal strength of the loT device data received by the gateways and directs the appropriate gateway to establish the connection if the signal strength exceeds the threshold. In an embodiment, the filtering criteria include vMAC addresses assigned to loT devices for PAwR-specific coordination. The sitewide controller 2300 may assign or manages vMAC addresses as virtual identifiers, enabling gateways to handle device connections within PAwR trains.

In an embodiment, the preset filtering criteria may include a cached history of preferred or previous connections between loT devices and gateways. For example, when multiple gateways receive a PAwR advertising message from the same device, the sitewide controller 2300 prioritizes the connection with the gateway that previously handled the device's PAwR train, based on cached connection history.

In an embodiment, the sitewide controller 2300 is configured to determine, whether an advertising message received at a first gateway from an loT device meets a preset filtering criteria. The controller can transmit a coordination signal to the first gateway, the coordination signal configured to establish a connection between the first gateway and the loT device if the advertising message meets the preset filtering criteria. The controller can further transmit a preset processing protocol to the first gateway, the preset processing protocol executable on the first gateway when the connection between the first gateway and the loT device is established, wherein the preset processing protocol includes a plurality of operational actions directed to the loT device

In an embodiment, the sitewide controller 2300 is configured to generate device health data associated with an IoT device by extracting device diagnostic parameters from an IoT device data associated to the loT device. The device diagnostic parameters are indicative of the loT device's health and operational status. The controller can generate gateway health data associated with a gateway device by extracting gateway diagnostic parameters from a gateway data associated to the gateway device, wherein the gateway diagnostic parameters are indicative of the gateway device's health and operational status. The controller can further determine whether any one of the gateway health data or the device health data meets a suspension criteria. The controller can transmit a suspension signal to the gateway device in response to the gateway health data meeting a suspension criteria, wherein the suspension signal is configured to suspend service discovery process performed by the gateway device. Additionally, the controller can transmit a filtering signal to the gateway device connected to the loT device in response to the loT device health data meeting the suspension criteria, wherein the filtering signal is configured to terminate the connection between the loT device and the gateway device

The inter-gateway data coordination, provided by the sitewide controller, enables synchronization among gateways 2100, 2200.

The sitewide controller 2300 is configured to control the service discovery process of the gateway. In an embodiment, the sitewide controller 2300 is configured to suspend the service discovery process for a gateway when a suspension criteria is met. The sitewide controller 2300 may also terminate a connection between an loT device and the gateway when the when the suspension criteria is met for the device health data. The sitewide controller 2300 generates and applies a suspension signal that halts the service discovery process, such as scanning for new loT devices or processing advertising messages. The suspension signal is initiated when any parameter in the gateway health data meets or exceeds the predefined suspension criteria. In an embodiment, the server 1500 diagnoses the gateway health data and device health data received from the sitewide controller 2300 to determine if the suspension criteria are met. Upon identifying that the suspension criteria are satisfied, the sitewide controller 2300 generates and transmits a suspension signal to the intended gateway exceeding the health metric thresholds. The suspension signal is configured to halt the service discovery process at the gateway to prevent further resource strain and maintain network stability. In an embodiment, the sitewide controller 2300 generates and transmits a filtering signal to the gateway device connected to the loT device with device health data meeting or exceeding the suspension criteria. The suspension signal terminates the connection between the loT device and the gateway device. The filtering signal is initiated when any parameter in the device health data meets or exceeds the predefined suspension criteria.

In an embodiment, in response to a suspension criteria being met, the sitewide controller 2300 selectively postpones specific sections of the service discovery process or processing of incoming loT device data processing that require longer processing times.

In an embodiment, the sitewide controller 2300 is configured to generate and manage loT device assignment maps to provide communication efficiency within large-scale deployments. The assignment maps define the grouping of IoT devices into subgroups based on parameters such as physical proximity, signal strength, and gateway coverage zones. By providing the assignment maps, the sitewide controller allocates most appropriate gateways to the loT devices.

The sitewide controller dynamically coordinates the assignment of loT devices to gateways, preventing scenarios where a gateway communicates with an loT device located at the far end of the deployment while another gateway is physically closer to the device. The assignment maps take into account factors such as device density, gateway load capacities, and environmental variables. For example, in a retail environment with thousands of ESLs, the sitewide controller assigns ESLs to the nearest gateways to balance the network load and reduce latency. The response slots may correspond to a dedicated time interval within the PAwR train configuration, enabling devices to transmit information to the gateway without collisions. The PAwR assignment map associates each device connection with its designated timeslot(s). Additionally, the assignment map stores device details, including encryption keys, communication states, and device identifiers or identifier(s) associated with a group of devices, which facilitates seamless reassignments or handoffs. By leveraging the PAwR assignment map, the system minimizes the time and computational overhead required to transition a device to a different gateway or radio.

In an embodiment, the sitewide controller 2300 leverages machine learning algorithms to improve the management of IoT device connections and assignments across gateways. Machine learning models are trained on parameters such as Received Signal Strength Indicator (RSSI), synchronization loss events, missed subevents, and historical device mobility patterns. The models analyze real-time data to determine the optimal assignment of devices to gateways, enabling dynamic and adaptive network management. For example, the machine learning model can assign weighted priorities to factors like RSSI, proximity, and gateway load, to decide whether a device connection should remain with its current gateway or be reassigned to an alternative gateway for improved performance. The machine learning-based implementation also facilitates predictive decision-making to prevent potential network inefficiencies. By analyzing trends in synchronization loss or missed subevents, the system can proactively reassign devices before connection quality degrades. Additionally, the machine learning models can weigh contextual parameters, such as device classification or priority levels, to optimize the network for critical devices like sensors in monitoring zones or Electronic Shelf Labels (ESLs) in high-traffic areas. The adaptive weighting mechanism allows the sitewide controller to maintain seamless connectivity and balanced resource distribution across gateways, even in high-density loT environments.

### Network Health and Device Monitoring Data

In an embodiment, the sitewide controller 2300 is configured to generate network and device health data.

In an embodiment, the sitewide controller 2300 receives PAwR advertising data from gateways operating within configured PAwR advertising channels. The sitewide controller 2300 processes the received PAwR advertising data to generate device health data associated with an loT device. The generation of device health data may include extracting device diagnostic parameters from the loT device data where the device diagnostic parameters are indicative of the device's health and operational status. In another embodiment, the sitewide controller 2300 may compare the loT device data against predefined thresholds or historical baselines of the device diagnostic parameters stored within the gateway 1100 or received from the server 1500.

In an embodiment, either of the server(s) 1500, 1600, 1700 may receive loT device data and the PAwR advertising data from the sitewide controller 2300. The server(s) may generate device health data by extracting device diagnostic parameters from the loT device data. Possible implementations for generating device health data at the server(s) are described in connection with FIG. 1.

In an embodiment, the sitewide controller 2300 is configured to generate gateway health data representing operational performance and status of a gateway. In an embodiment, the sitewide controller 2300 processes gateway data received from the gateway to generate gateway health metrics indicative of the gateway's operational status. The generation of gateway health data may include extracting gateway diagnostic parameters from the gateway data. For example, the sitewide controller 2300 may monitor the volume of queued packets or evaluate latency trends to detect potential congestion. In an embodiment, the sitewide controller 2300 may compare the extracted gateway health data against predefined thresholds or historical baselines of gateway diagnostic parameters stored locally within the sitewide controller 2300 or received as configuration data from the server 1500.

In an embodiment, either of the server(s) 1500, 1600, 1700 may receive gateway data from the sitewide controller 2300. The server(s) may process the gateway data to generate gateway health data by extracting gateway diagnostic parameters from the gateway data. Possible implementations for generating gateway health data at the server(s) are described in connection with FIG. 1.

In an embodiment, the sitewide controller 2300 is configured to generate network health data by aggregating device health data and gateway health data corresponding to one or more gateway(s) and device(s) received from the gateway(s). The sitewide controller 2300 may receive or generate device health data representing diagnostic parameters corresponding to loT device(s) and gateway health data representing diagnostic parameters corresponding to gateway(s). The aggregation of device health data and gateway health data at the sitewide controller 2300 includes combining device and gateway health datasets to create a unified representation of the network's operational state. The aggregation includes synchronizing the datasets based on shared attributes such as timestamps, geographic zones, or proximity zones for temporal and spatial correlation. For example, by matching timestamps, the server identifies concurrent events or performance trends across devices and gateways.

The generation of network health data comprises extracting network diagnostic parameters from the aggregated device health data and gateway health data by correlating shared attributes such as timestamps, geographic zones, or connectivity states. The sitewide controller 2300 compares the extracted parameters against historical performance baselines and predefined thresholds to detect anomalies indicative of network issues. For instance, the sitewide controller 2300 may analyze trends in latency, signal strength fluctuations, or error rates across devices and gateways to identify deviations from expected behavior.

In an embodiment, the network health data is generated by the server 1500 from the device health data and the gateway health data received from the sitewide controller 2300. Possible implementations for generating network health data at the server(s) are described in connection with FIG. 1.

The network health data can be generated at an individual gateway level such as network health data for gateway 1100. The network health data may also reflect an overall assessment of network conditions across all gateways.

### Handoff Routine

In an embodiment, the sitewide controller 2300 is configured to implement a handoff process for the source gateway that meets or exceeds the suspension criteria. The handoff process includes transferring an IoT device connection from the source gateway to a target gateway. Handoff enables the sitewide controller 2300 to modify or reconfigure the network in response to the gateway health data of the source gateway meeting or exceeding the suspension criteria. The handoff routine includes initiating reassignment of the loT device connection to optimize network continuity and maintain seamless connectivity.

The handoff routine is executed by the sitewide controller 2300 by transferring the device details from the source gateway to the target gateway. The target gateway can be either pre-designated within the handoff routine or dynamically selected based on target gateway selection parameters such as current load capacity, proximity to the loT device, received signal strength, device communication history, and available spectral resources. Within the handoff routine, the sitewide controller 2300 initiates the transfer of device details from the source gateway to the target gateway. The device details includes PAwR synchronization parameters, vMAC addresses, timing data, specific loT device identifier(s), identifier(s) associated with a group of loT devices, encryption keys, communication states, device status indicators, and protocol versions necessary for the seamless continuation of the device connection.

In an embodiment, the sitewide controller 2300 applies preset filtering criteria and other selection parameters to identify the target gateway for the handoff based on factors such as signal strength, proximity, cached connection history, or available resources. The selected target gateway then processes the received device details, enabling the target gateway to establish and maintain a seamless connection with the loT device.

The description of PAwR synchronization parameters, network health parameters, gateway health parameters, device health parameters, the handoff routine, suspension criteria, and other associated processes are not reproduced here for brevity and are discussed in detail in connection with FIG. 1. The processes attributed to the edge connect module within the gateways in FIG. 1 can, in the present embodiments, be performed by the sitewide controller 2300.

Referring now to FIG. 3, shown therein is an illustrative block diagram of the edge connect module 300, according to an embodiment.

In an embodiment, the edge connect module implements a flexible, multi-vendor edge framework that supports a range of loT devices 3010, 3020 managed through vendor-specific edge applications and common device recipes. The edge connect module can be the edge connect module 1112 of FIG. 1, or the edge connect module in the sitewide controller of FIG. 2. The technical architecture includes an edge management system where the edge connect module operates as the central node, orchestrating communication, processing, and operational control across diverse devices and applications from different vendors.

In an embodiment, the edge connect module serves as a centralized layer that hosts vendor-specific edge applications, such as vendor A edge application 3050 and vendor B full edge application 3060. The application(s) includes a distinct edge application logic component, such as edge application logic 3052 within vendor A's application and edge application logic 3062 within vendor B's application. The components 3050, 3052, 3060, and 3062 handle the specific operational and processing requirements specified by a vendor. By situating the edge application logic within the edge connect module, the architecture provides that device-specific operations, such as data processing, event handling, and device status management, can be tailored for a vendor without needing separate physical infrastructure.

The common device recipes 3070 are managed by the edge connect module. The common device recipes 3070 represent pre-configured operational workflows that define actions or sequences, such as onboarding routines, control commands, and data preprocessing steps, that can be applied universally across different device types 3010, 3020 and vendor applications 3050, 3060. The edge connect module executes these recipes as templates that standardize operations across loT devices (such as devices 3010 for vendor A and 3020 for vendor B), allowing consistent functionality regardless of the specific edge application logic in use. The centralized recipe management reduces redundant processing and promotes operational uniformity across the network.

The recipes represent self-contained blocks of logic tailored to manage device-specific characteristics including proprietary protocols and unique identifiers. The recipes align the device-specific characteristics with the standardized formats used by the platform. Through recipes, the edge connect module supports both vendor-specific and universally applicable configurations, enabling robust, adaptable, and scalable device management. A recipe can function autonomously or in conjunction with other recipes, allowing for flexible and layered device interactions. A device recipe, for instance, is used to translate loT device-specific data, such as unique sensor addresses or proprietary data structures, into platform-compatible formats. The process ensures that device-specific information is uniformly represented within the platform's data schema, regardless of a device's unique protocol requirements. For example, the edge connect module can use a device recipe to interpret a proprietary data stream from a sensor and convert it into a standardized event stream. This event stream can then be processed or transmitted according to common protocols, making the device's data accessible and usable within the platform's ecosystem. The platform can be the Edge Connect platform.

Similarly, edge application logic recipes 3052, 3062 allow the edge connect module to interpret and convert the standardized data streams into actionable events that can be communicated to enterprise applications hosted in the cloud including applications managed by vendors or end-users. The recipes provide the translation and control logic such that the data gathered from loT devices can be seamlessly integrated with enterprise systems. For vendors or third parties who deploy specialized devices, a full edge application recipe integrates both the device-specific and application-specific logic.

Recipes, as implemented within the edge connect module, can be provided by device manufacturers, platform operators, or end-users.

The edge connect module also includes a device communication component 3064 within vendor B's application that manages protocol translation and secure data forwarding. The device communication component 3064 enables seamless interoperability by handling the specific data formats, encryption protocols, and communication standards required by a vendor's devices. For example, the device communication 3064 in vendor B's application provides that IoT devices 3020 can transmit data to and receive commands from the edge system using protocols optimized for these devices 3020, while adhering to the security and formatting requirements set by the edge connect module.

The technical architecture allows for the integration of additional vendor-specific applications into the edge connect module. As new edge applications are added, the common device recipes 3070 can be dynamically updated or extended to include additional operational workflows. For instance, if a new vendor's devices require custom onboarding steps or specific data preprocessing, the edge connect module can update the recipes accordingly.

Furthermore, the edge connect module is configured to support real-time data management and secure cloud integration. For scenarios requiring immediate processing, the edge connect module can locally handle priority functions, such as data filtering or device coordination, within an edge application logic. When cloud-based processing is required, selected data streams can be forwarded to cloud-based configuration or application servers (such as the configuration server 1500 or third-party application servers 1600, 1700) without interrupting local device operations. This operation allows the system to balance edge and cloud processing based on operational needs, enabling low-latency decision-making at the edge while providing comprehensive analysis in the cloud.

The edge connect module utilizes recipes as modular, revision-controlled configurations to enable seamless interactions between connected loT devices and the network. Within this framework, the edge connect module operates as an instance within the edge architecture, functioning as an intermediary layer that manages and standardizes communication between diverse loT devices, such as devices 3010 and 3020, and the network.

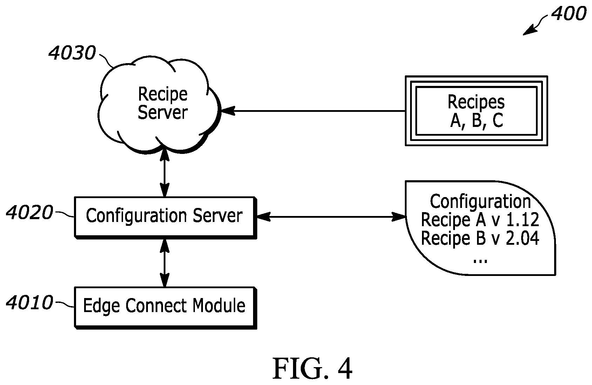

Referring now to FIG. 4, shown herein is an illustrative block diagram of the loT wireless network management system 400, according to an embodiment.

In an embodiment, the edge connect module 4010, configuration server 4020, and recipe server 4030 coordinate to manage recipe configurations in a centralized and version-controlled manner.

The edge connect module 4010 operates as the operational core to execute a configuration of recipes that define specific tasks and processes within the loT network. A configuration is a curated collection of recipes, such as recipes A, B, and C, that are collectively designed to perform a comprehensive set of actions across devices (not shown) connected to the edge connect module 4010. The configurations allow a variety of combinations of recipes to be tailored for specific operational needs across different instances of the edge connect module 4010.

The configuration server 4020 operates as an intermediary control node, providing for the deployment and synchronization of recipe configurations within the network. The configuration server 4020 manages the interaction between the edge connect module 4010 and the recipe server 4030, providing that the most up-to-date recipes are consistently available across all edge instances. The configuration server 4020 retrieves configurations and their associated recipes from the recipe server 4030, maintaining version accuracy and alignment with the latest recipe updates. The configuration server 4020 may be connected to a user terminal (not shown). Through the user terminal, users can initiate configuration updates, view recipe versions, adjust operational parameters, and deploy new recipes across edge connect module instances, enabling precise control and responsive adjustments to the loT network.

The recipe server 4030 (also referred to as the edge direct functionality) operates as the centralized repository for recipes and can maintain version-controlled instances of a recipe. The central storage provides that configurations executed by the edge connect module 4010 are based on the latest recipe logic and standards to provide stability and uniformity across multiple instances of the edge connect module. When an update or modification is made to a recipe, the recipe server 4030 manages the versioning, allowing the configuration server 4020 to access and distribute the most recent, verified versions.

In operation, the configuration server 4020 communicates with the recipe server 4030 to request and retrieve specific recipes included in a configuration. For instance, when the edge connect module 4010 requires an updated configuration, the configuration server 4020 will query the recipe server 4030 for the latest versions of recipes A, B, and C. The recipe server 4030 processes the query by identifying and providing the current versions, such as version 1.12 of recipe A and version 2.04 of recipe B, to the configuration server 4020. The architecture enables the system 400 to dynamically adapt to changing operational requirements without manually updating a individual edge connect instance.

Upon receiving the updated configuration, the edge connect module 4010 loads and initializes the recipes as directed by the configuration server 4020. The edge connect module 4010 utilizes the recipes to execute edge-level operations, including data processing, protocol translation, and device coordination as specified within a recipe. By loading recipes in real time, the edge connect module provides responsiveness and adaptability to manage a range of tasks while minimizing latency.

The centralized configuration and recipe management approach allows for the scalable deployment of edge functionalities across numerous sites and devices. For example, a single change to a recipe within the recipe server 4030 can propagate through the configuration server 4020 to all instances of the edge connect module 4010 that rely on that recipe. The propagation provides that all connected loT devices and applications consistently operate on the latest configuration standards, providing uniformity across large-scale loT networks.

In scenarios where custom or vendor-specific operations are required, the edge connect module 4010 can process specific configurations by selectively loading relevant recipes stored in the recipe server 4030. For instance, a specific configuration for vendor A's devices might include customized recipes that address proprietary communication protocols or device-specific preprocessing steps. Similarly, standardized configurations can be used to maintain common device functions across different deployments for interoperability while allowing for targeted customizations when necessary.

Additionally, by separating recipe storage and execution into discrete server functions, the architecture reduces operational redundancy and optimizes resource usage across the network. The recipe server 4030 provides a single point of control for recipe versioning and distribution. The edge connect module 4010 performs the edge-processing and device-management functions.

In an embodiment, the edge connect module 4010 can represent the edge connect module 1112 of FIG. 1, or the edge connect module in the sitewide controller of FIG. 2, depending on deployment requirements. In an embodiment, the configuration server 4020 is the cloud configuration server 1500 of FIG. 1, or the configuration server 2500 of FIG. 2. The architecture of FIG. 4 can integrate within the larger system architecture shown in FIG. 1 or FIG. 2, where the edge connect module 4010 operates alongside gateways, loT devices, and cloud-based servers. Although the specific devices and gateways are not shown in FIG. 4, they are present within the broader system, connecting through the edge connect module 4010.

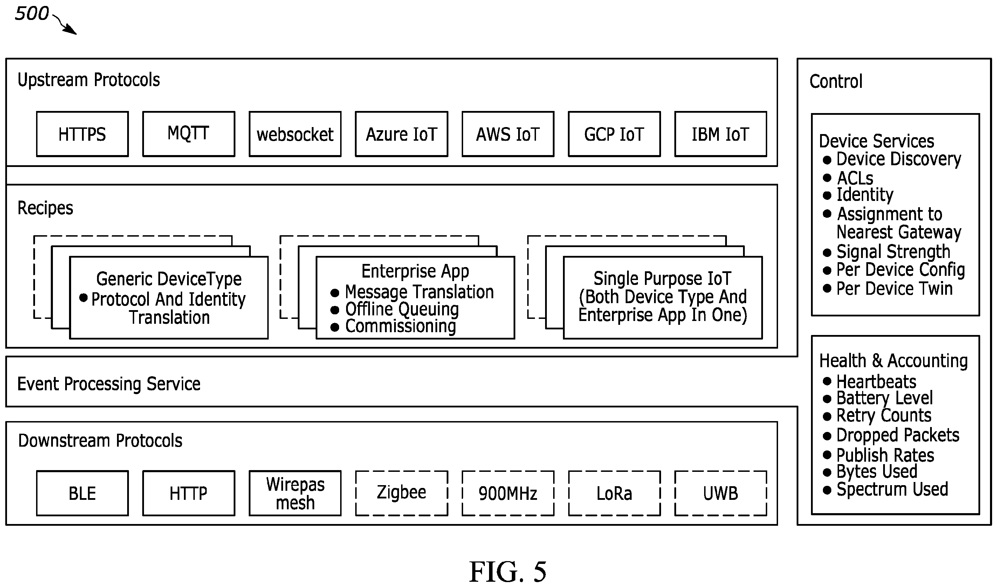

Referring now to FIG. 5, shown herein is an illustrative block diagram of the loT edge connectivity framework 500, according to an embodiment.

The "Upstream Protocols" (e.g., HTTPS, MQTT, WebSocket, Azure loT, AWS loT, GCP loT, IBM loT) represent the connectivity pathways from the edge connect module (as described in Fig. 1 or Fig. 2) to cloud-based platforms and services in the cloud analysis layer. The protocols enable secure and structured data transmission to the cloud, where data can be further processed, analyzed, and stored. For instance, MQTT and HTTPS are used to transmit cloud-directed data from the edge. The cloud-directed data includes device metrics, status updates, and event-triggered messages. The integration of specific vendor platforms, such as Amazon Web Services loT (AWS loT), Google Cloud Platform loT (GCP loT), and International Business Machines loT (IBM loT), allows the edge connect module to interact seamlessly with cloud services from different providers, enabling flexibility in managing multi-vendor loT networks.

The "Recipes" layer provides pre-configured workflows or templates that define operational logic and enable the translation of device-specific data formats and protocols into standardized formats compatible with the platform. Recipes in this context are similar to those described in Fig. 3, executed by the edge connect module to coordinate device operations. Fig. 5 illustrates several categories of recipes:

Generic Device Type: This recipe manages "Protocol and Identity Translation," allowing the edge connect module to normalize data from heterogeneous loT devices (e.g., sensors, actuators). For instance, a BLE temperature sensor's data can be translated into a unified format before being sent upstream, making it compatible with centralized analysis.

Enterprise App: Recipes within the Enterprise App category support complex operations such as message translation, offline queuing, and commissioning of devices. The Enterprise App recipe enables interoperability with enterprise applications by translating raw loT data into actionable insights, even supporting queuing when connectivity is intermittent.

Single Purpose loT: The recipe represents a combined logic for both "Device Type and Enterprise App in one," simplifying the configuration for specialized loT devices that perform dedicated functions. The recipes streamline the edge-to-cloud data flow by consolidating protocol handling and enterprise logic within a single recipe structure.

The "Event Processing Service" layer represents the real-time handling of events generated by loT devices. Managed by the edge connect module, the event processing service processes events from loT devices (such as anomaly alerts or status updates) and applies predefined rules or triggers. For instance, if a temperature sensor transmits a reading beyond a threshold, the edge connect module can initiate a corresponding action, such as sending a command to an actuator to adjust environmental controls.

The "Downstream Protocols" (e.g., BLE, HTTP, Wirepas Mesh, Zigbee, 900MHz, LoRa, UWB) facilitate communication from the edge connect module to loT devices at the network edge. For example, the downstream protocols may apply between the perception layer 1002 and network layer 1004 of FIG. 1. The downstream protocols allow the edge connect module to communicate with diverse loT devices, providing compatibility with various wireless standards used across different deployment environments. For instance, BLE and Zigbee are often utilized for short-range, low-power sensor networks, while LoRa and 900MHz may support long-range, low-bandwidth communication with remote devices.

The "Control Panel" refers to the comprehensive control and monitoring functionalities. Device Services functions includes device discovery, access control lists (ACLs), identity management, assignment to nearest gateway, signal strength tracking, per-device configurations, and device twin functionality. The device services enable the edge connect module to manage device lifecycles, providing that a loT device is authenticated, assigned to an optimal gateway, and configured as needed. For example, when a new device joins the network, the edge connect module handles its discovery, validates its identity, and assigns it to the nearest gateway based on signal strength and network load.

The "Health & Accounting" can refer to the monitoring data generated by edge connect module in FIG. 1. The monitoring data includes metrics such as heartbeats, battery level, retry counts, dropped packets, publish rates, bytes used, and spectrum usage are tracked. The monitoring data is generated by the edge connect module and provides real-time visibility into device health and network performance to support maintenance and diagnostic processes. For instance, the edge connect module may flag devices with low battery levels or high retry counts, allowing pre-emptive maintenance or adjustments to network configurations.

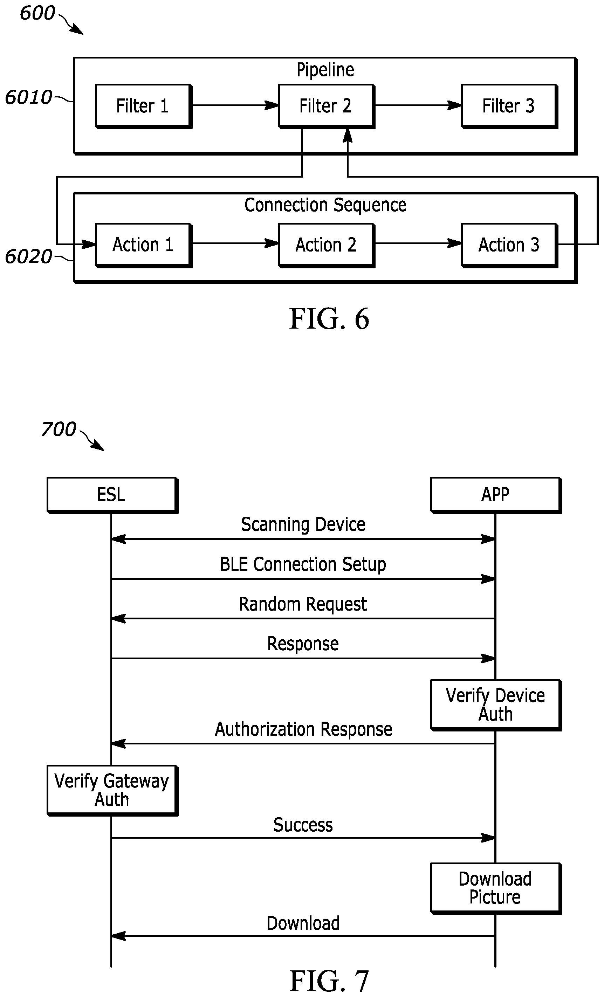

Referring now to FIG. 6, shown herein is an illustrative flow chart of the event detection and trigger mechanism 600, according to an embodiment.

In an embodiment, the edge connect module provides for event detection, filtering, and action triggering based on a structured pipeline and connection sequence. The edge connect module enables a streamlined process to detect and respond to asynchronous events that flow through the network.

In this embodiment, the Pipeline 6010 comprises sequentially arranged filters performing specific operations on incoming events. For example, at Filter 1, events such as Bluetooth Low Energy (BLE) advertisements, messages from the cloud analysis layer 1006, or inter-pipeline messages enter the pipeline for initial screening. Filter 1 serves as the gateway, assessing event relevance and verifying that pertinent data proceeds further. Upon successful passage, an event enters Filter 2, where intermediate processing occurs. Here, Filter 2 may adjust the event parameters or append additional metadata, effectively preparing the event for subsequent action. The Filter 2 can be configured to alter the internal state of the edge connect module, impacting other connected loT devices or system processes in real-time. Thereafter, events arrive at Filter 3, the concluding stage in the pipeline. The Filter 3 determines if the event meets all necessary criteria to initiate a response in the Connection Sequence 6020. Filter 3 can either conclude the pipeline 6010 by terminating unnecessary events or emit refined events that may trigger new filters or connection sequences.

The Connection Sequence 6020 follows the filtering process as a series of actions that are triggered once an event successfully completes the pipeline 6010. The Connection Sequence 6020, illustrated as Action 1, Action 2, and Action 3, represents a controlled progression of responses, the action(s) intended to interact with devices or the platform in a defined order. Action 1 initiates by establishing a connection with an IoT device such as a BLE device that has signaled its presence. Action 1 may include configuring specific read/write characteristics on the target device, effectively setting up the parameters for communication. Once connected, the process moves to Action 2, where the edge connect module enables notifications or continuous updates from the device. Action 2 may include entering a state that listens for periodic data, thereby enabling real-time monitoring of device status. Lastly, Action 3 finalizes the communication process, allowing the edge connect module to adjust operational settings or send configuration updates as required. Additionally, Action 3 may emit further events, looping them back into other pipelines or connection sequences to create an adaptive feedback loop that improves the system's responsiveness and adaptability.

The Pipeline 6010 and the Connection Sequence 6020 may operate asynchronously. Events such as BLE advertisements, cloud messages, and inter-pipeline communications flow through the system independently, allowing the edge connect module to operate based on a set of predefined rules. Predefined rules are system-configured instructions within the edge connect module that establish how incoming events, such as device status updates, BLE advertisements, or cloud messages, should be processed, filtered, and action sequences to follow. The predefined rules include actions such as triggering specific workflows, adjusting device settings, or activating control sequences based on context and operational requirements. For example, BLE advertisements received from devices in the perception layer 1002 provide updates on device status or location, which the pipeline processes to initiate relevant connection sequences. Similarly, configuration data, as described in FIG. 1, may carry directives that alter the behavior of connected loT devices or initiate real-time configurations within the system. A filter within the pipeline can modify events to meet specific operational needs, while the connection sequences trigger complex, context-sensitive actions on the target devices.

The pipeline and connection sequence model allows for variations and adaptations, to improve the flexibility of the event detection and action-triggering process. The pipeline and connection sequence structure can dynamically adjust to real-time changes in network conditions or device status, permitting new filters or actions to be added without disrupting ongoing operations. Additionally, the pipeline can include conditional loops, where filters or actions maintain a monitoring or wait state until specified conditions are met. For example, the edge connect module may use Filter 2 to assess the event frequency and determine whether a notification loop should continue based on data patterns.

The interconnected pipeline of filters and sequential connection model, the system can implement a mechanism for processing, filtering, and triggering responses to loT events disclosed in other embodiments. The architecture enables efficient real-time interaction between the cloud analysis layer 1006, the intermediate network layer 1004, and the loT devices within the perception layer 1002 as illustrated in FIG. 1. For example, the perception layer 1002, comprising a multitude of loT devices like BLE-enabled sensors, actuators, and Electronic Shelf Labels (ESLs), continually transmits loT device data including status updates, sensor readings, and control signals that initiate a range of activities at the edge level. The edge connect module is configured to operate as a central processor of loT device data, filtering and coordinating events through the structured Pipeline 6010. When events are filtered through Pipeline 6010, the events are shaped and transformed according to the system's predefined rules, enabling the edge connect module to prioritize, alter, or enrich an event's content before advancing the event to a Connection Sequence 6020. The Pipeline 6010 and the Connection Sequence 6020 enables actions such as protocol translation, device authentication, and real-time configuration changes to be executed in direct response to event triggers. The configuration server 1500 further improves process by transmitting configuration data that dynamically updates the pipeline parameters and connection sequences at the gateway level. Additionally, user instruction data received from a user terminal can influence the behavior of these pipelines and sequences by adjusting device-specific rules, triggering custom event responses, or altering threshold parameters in real-time.

Referring now to FIG. 7, shown herein is an illustrative flow chart of the event detection and trigger mechanism 700, according to an embodiment.

The mechanism 700 involves an Electronic Shelf Label (ESL) and an application on a gateway, according to an embodiment. The mechanism 700 illustrates a multi-step authentication and communication process that enables secure interactions and data exchange between the ESL and the application on the gateway, as coordinated by the edge connect module.

The mechanism 700 includes the application scanning for BLE advertising messages broadcast by the ESL, thereby allowing the system to identify and establish preliminary communication with nearby loT devices. The scanning action serves as the first step in the connection sequence, with the edge connect module continuously monitoring for the advertisements, effectively facilitating the identification of IoT devices in proximity. The application may reside on the edge connect module, operating as part of the intermediate network layer that facilitates interaction with the ESL at the perception layer.

Upon detecting the ESL's BLE advertisement, the edge connect module initiates a BLE Connection Setup between the ESL and the application, enabling a secure, low-latency communication channel. The connection setup process provides a direct pathway for subsequent data exchange and authentication procedures. As part of the BLE Connection Setup, the system may conduct a handshake to confirm the readiness of both the ESL and application to proceed.

The application then sends a Random Request to the ESL, transmitting a first randomly generated number to initiate a challenge-response protocol. The exchange may form the first layer of the authentication mechanism within the connection sequence. The ESL responds with a Response message including a second random number along with first authorization information, which is then processed by the application. The authorization information, managed by the edge connect module, allows the application to conduct a preliminary verification of the ESL's identity, confirming its legitimacy before proceeding further.

In the Verify Device Authentication process, the application utilizes the random numbers and authorization information provided by the ESL to perform a device authentication check. The verification confirms the ESL's identity against stored device profiles within the gateway, providing that authorized devices can proceed with the interaction. Following successful device authentication, the application transmits an Authorization Response including additional authentication credentials, signaling the ESL to verify the application's authenticity. The ESL executes a Verify Gateway Authentication step to confirm the gateway's identity and its permissions, establishing a two-way trust between the gateway and the loT device. The bidirectional verification provides for secure data transactions and enables that trusted gateways and applications to control or interact with loT devices in the system.

Upon successful verification, the connection sequence reaches a Success state to complete the authentication process and establishing a trusted communication channel between the ESL and the application. At this point, the edge connect module allows the application to initiate data transmissions securely, having met all prerequisites for an authenticated session.

In the present embodiment, the final step in the connection sequence includes a Download Picture command, where the application transfers image data, such as a product image or promotional graphic, to the ESL. The transfer of image data initiates real-time updates to the ESL's display, improving the device's utility in environments like retail stores. The downloaded content, typically visual information associated with the ESL, is stored and rendered by the ESL in response to the application's command, allowing for dynamic and immediate updates that reflect inventory or promotional changes.

This workflow illustrates the edge connect module's capability to manage complex, multi-step interactions between loT devices and gateway applications, combining secure authentication, data exchange, and real-time updates. Additionally, variations in this connection sequence may include additional layers of verification, dynamic re-authentication based on session duration, or conditional access restrictions based on the user instruction data from a user terminal. User instruction data, when provided, may influence the authentication protocols or dictate specific actions post-authentication, enabling tailored workflows that can adapt to changing operational requirements or user preferences.

The mechanism 700 can be implemented within the larger loT architecture described in FIG. 1 and FIG. 2. The edge connect module may coordinate the sequence, overseeing event detection, authorization verification, and the data flow between the ESL and application. The loT device data (e.g., BLE advertisements and status updates) generated by the ESL is processed through the edge connect module's pipeline for authentication and authorization before any action is taken. The gateway data includes the authorization and verification exchanges that uphold secure communication. The cloud servers, such as the configuration server, may provide updated protocols or instructions to the edge connect module to influence the authentication or data-transfer processes.

In an embodiment, the edge connect module can refer to the edge connect module 1112 of FIG. 1, or the edge connect module in the sitewide controller of FIG. 2, depending on deployment requirements. Although the specific devices and gateways are not shown in FIG. 7, they are present within the broader system, connecting through the edge connect module.

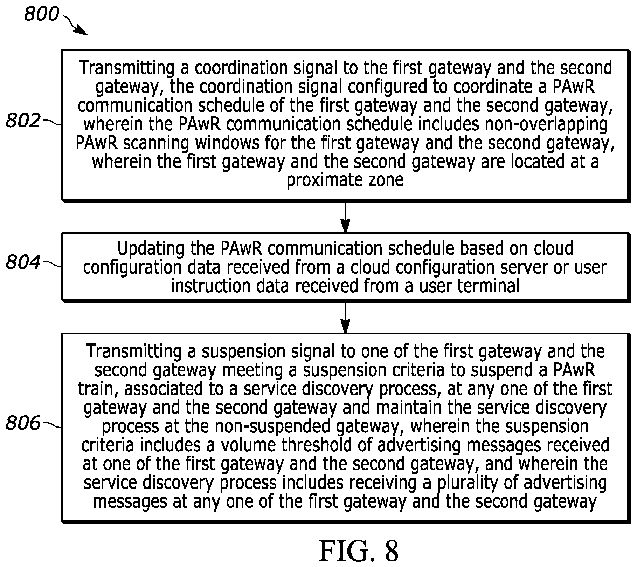

Referring now to FIG. 8, shown herein is an illustrative flow chart of a sitewide configuration method 800, according to an embodiment.

At 802, the method includes transmitting a coordination signal to the first gateway and the second gateway, the coordination signal configured to coordinate a PAwR communication schedule of the first gateway and the second gateway, wherein the PAwR communication schedule includes non-overlapping PAwR advertising intervals for the first gateway and the second gateway, wherein the first gateway and the second gateway are located at a proximate zone.

The PAwR communication schedule includes timing, coordination, and operational parameters for periodic advertising with responses (PAwR) communication between gateways and loT devices within a network. The schedule may include non-overlapping PAwR advertising intervals to provide that multiple gateways operating within a proximate zone avoid interference and redundancy by scanning and responding to PAwR trains in distinct time intervals. Additionally, the PAwR communication schedule includes parameters such as PAwR train configurations, response slot timing, channel sequence mapping, subevent intervals, and synchronization offsets. The parameters provide for device discovery, data exchange, and communication reliability by mitigating packet collisions. The schedule can be dynamically updated based on inputs such as configuration data or user instruction data, enabling real-time adaptability to network conditions or operational requirements.

The advertising message data from IoT devices includes device-specific details such as Media Access Control (MAC) addresses, virtual MAC (vMAC) addresses, signal strength, device type, firmware version, battery status, service UUIDs, proximity information, sensor readings, and operational state indicators.

At 804, the method includes updating the PAwR communication schedule based on configuration data received from a cloud configuration server or user instruction data received from a user terminal.

At 806, the method includes transmitting a suspension signal to one of the first gateway and the second gateway meeting a suspension criteria to suspend a PAwR train, associated to a service discovery process, at any one of the first gateway and the second gateway and maintain the service discovery process at the non-suspended gateway, wherein the suspension criteria includes a volume threshold of advertising messages received at one of the first gateway and the second gateway, and wherein the service discovery process includes receiving a plurality of advertising messages at any one of the first gateway and the second gateway.

The scanning schedule includes assignments of scanning intervals, timing schedules, and advertising channels.

The suspension signal is configured to suspend a plurality of low-priority service discovery processes at one of the first gateway and the second gateway. The plurality of low-priority service discovery processes includes authentication checks, detailed capability inquiries, or secure key exchanges.

The suspension criteria include minimum signal strength threshold, device priority, battery level, and device classification.

The first gateway and the second gateway are determined in a same proximity zone based on virtual MAC (vMAC) addresses assigned to each gateway and correlated to a mapping framework identifying a list of proximate gateways.

The sitewide controller is connected to a plurality of gateways are divided into a plurality of zones.

The various embodiments described herein are not mutually exclusive and may be combined or implemented in any suitable manner to achieve the desired functionality. Variations, modifications, and equivalents to the disclosed embodiments are possible without departing from the scope of the disclosure. For example, components, data exchanges, and processes described in one embodiment may be adapted or utilized in another embodiment to provide enhanced functionality. Additionally, steps or operations attributed to one component may, in certain implementations, be performed by another component or distributed across multiple components. Such combinations, modifications, and alternative implementations are intended to be within the scope of the disclosure.

## Claims

1. A sitewide controller device configured to connect to a first gateway and a second gateway in a PAwR architecture, the sitewide controller further configured to:
transmit a coordination signal to the first gateway and the second gateway, the coordination signal configured to coordinate a PAwR communication schedule of the first gateway and the second gateway, wherein the PAwR communication schedule comprises coordinated PAwR advertising intervals for the first gateway and the second gateway, wherein the first gateway and the second gateway are located at a proximate zone.

2. The device of claim 1, wherein the sitewide controller is further configured to:
update the PAwR communication schedule based on configuration data received from at least one of a configuration server or user instruction data received from a user terminal.

3. The device of claim 1, wherein the coordination signal is configured to cause a suspension of a service discovery process at either or both of the first and second gateways based at least in part on a coordination criteria.

4. The device of claim 1, wherein the coordination criteria include a volume of advertising messages, the advertising messages includes at least one of IoT device Media Access Control (MAC) address, loT device virtual MAC (vMAC) address, signal strength, or data associated with at least one of a type or manufacturer of a device broadcasting the advertising messages.

5. The device of claim 1, wherein the PAwR communication schedule comprise at least one of assignments of advertising intervals, timing schedules, or channels.

6. The device of claim 1, wherein the coordination signal is configured to suspend a plurality of low-priority service discovery processes at one of the first gateway and the second gateway, wherein the plurality of low-priority service discovery processes includes at least one of authentication checks, detailed capability inquiries, or secure key exchanges.

7. The device of claim 1, wherein the coordination criteria comprise at least one of a minimum signal strength threshold, a device priority, a battery level, or a device classification.

8. The device of claim 1, wherein the first gateway and the second gateway are determined in a same proximity zone based on virtual MAC (vMAC) addresses assigned to each gateway and correlated to a mapping framework identifying a list of proximate gateways.

9. The device of claim 1, wherein the sitewide controller is connected to a plurality of gateways are divided into a plurality of zones.

10. A method comprising:
transmitting a coordination signal to a first gateway and a second gateway, the coordination signal configured to coordinate a PAwR communication schedule of the first gateway and the second gateway, wherein the PAwR communication schedule comprises coordinated PAwR advertising intervals for the first gateway and the second gateway, wherein the first gateway and the second gateway are located at a proximate zone.

11. The method of claim 10, further comprising:
updating the PAwR communication schedule based on configuration data received from at least one of a configuration server or user instruction data received from a user terminal.

12. The method of claim 10, wherein the coordination signal is configured to cause a suspension of a service discovery process at either or both of the first and second gateways based at least in part on a coordination criteria.

13. The method of claim 10, wherein the coordination criteria include at least one of a volume of advertising messages, the advertising messages including at least one of loT device Media Access Control (MAC) address, loT device virtual MAC (vMAC) address, signal strength, or data associated with at least one of a type or manufacturer of a device broadcasting the advertising messages, or the method of claim 10, wherein the PAwR communication schedule comprise at least one of assignments of advertising intervals, timing schedules, or channels, or the method of claim 10, wherein the coordination signal is configured to suspend a plurality of low-priority service discovery processes at one of the first gateway and the second gateway, wherein the plurality of low-priority service discovery processes includes at least one of authentication checks, detailed capability inquiries, or secure key exchanges, or the method of claim 10, wherein the coordination criteria comprise at least one of a minimum signal strength threshold, a device priority, a battery level, or a device classification, or the method of claim 10, wherein the first gateway and the second gateway are determined in a same proximity zone based on virtual MAC (vMAC) addresses assigned to each gateway and correlated to a mapping framework identifying a list of proximate gateways, or the method of claim 10, wherein the sitewide controller is connected to a plurality of gateways are divided into a plurality of zones.

14. A computer-readable storage medium, storing instructions thereon, that, when executed by a processor, configure the processor to:
transmit a coordination signal to the first gateway and the second gateway, the coordination signal configured to coordinate a PAwR communication schedule of the first gateway and the second gateway, wherein the PAwR communication schedule comprises coordinated PAwR advertising intervals for the first gateway and the second gateway, wherein the first gateway and the second gateway are located at a proximate zone.

15. The storage medium of claim 14, wherein the coordination signal is configured to cause a suspension of a service discovery process at either or both of the first and second gateways based at least in part on a coordination criteria.
